# EUROPEAN PATENT SPECIFICATION

(11) **EP 3 561 698 B1**
(45) Date of publication and mention of the grant of the patent: **25.10.2023**
(21) Application number: 17893343.8
(22) Date of filing: 24.04.2017
(51) Int. Cl.: G06F 16/903, G06F 16/9035

(54) **METHOD AND DEVICE FOR INTELLIGENTLY PROCESSING APPLICATION EVENT**
VERFAHREN UND VORRICHTUNG ZUR INTELLIGENTEN VERARBEITUNG EINES ANWENDUNGSEREIGNISSES
PROCÉDÉ ET DISPOSITIF DE TRAITEMENT INTELLIGENT D'UN ÉVÉNEMENT D'APPLICATION

(30) Priority: 22.01.2017 CN 201710052214
(43) Date of publication of application: 30.10.2019
(73) Proprietor: Huawei Technologies Co., Ltd., Longgang District Shenzhen, Guangdong 518129 (CN)
(72) Inventor: LEI, Zhengxiong, Guangdong 518129 (CN)
(74) Representative: Pfenning, Meinig & Partner mbB
(86) International application number: PCT/CN2017/081695
(87) International publication number: WO 2018/133231

(56) References cited:
- CN-A- 104 660 792
- CN-A- 105 446 994
- US-A1- 2013 339 454
- US-A1- 2015 213 355

## Description

### TECHNICAL FIELD

The present invention relates to the field of communications technologies, and in particular, to a method and an apparatus for intelligently handling an application event.

### BACKGROUND

With the development of the mobile Internet and artificial intelligence technologies, various intelligent assistants are emerging continuously. Essentially, the intelligent assistants are to make it easier for a user to obtain various online information or online services.

Currently, various intelligent assistants (for example, Apple Siri, Google Assistant, Microsoft Cortana, and Baidu Duer) provide a conversational entry, determine audio content of a user through speech recognition or semantic understanding of the user, execute various instructions of the user, and query information according to the instructions of the user, to meet a user requirement.

An intelligent assistant includes two parts: a front end (a client side) and a back end (a cloud server side). The front end understands a user requirement through man-machine interaction. The back end is interconnected with a large quantity of third-party services, for example, a query service providing information and a task service.

As described above, the intelligent assistant provides a service for a user through man-machine interaction. However, the intelligent assistant also has the following disadvantages: (1) Information or a service is passively provided. In other words, the intelligent assistant may provide corresponding information or a corresponding service only after the user gives a requirement instruction. (2) The intelligent assistant cannot comprehensively understand the user because the intelligent assistant cannot interact with a large quantity of applications or functions in a terminal. Because the intelligent assistant cannot fully understand the user, even if the intelligent assistant completely determines the requirement instruction spoken by the user through man-machine interaction, it is difficult to provide a most proper service for the user, and consequently user experience is compromised.

US 2015/213355 A1 describes a virtual assistant system. The virtual assistant system includes a mobile device, an assistant server and devices and services included within the virtual assistant system desired to be controlled. The virtual assistant system can control any such devices and services by receiving an input to perform a function at the devices and services, translate the input into a language sharable by all of the external devices and services through a respective plugin so that such inputs can be understood between the plurality of devices and services, and functions can be performed at the desired device(s) or service(s) either remotely or locally. This control is sharable with other users as instructed.

### SUMMARY

The above problems are solved by the subject-matter according to the independent claims. Embodiments of the present invention provide methods, a terminal and a cloud server for intelligently handling an application event according to the independent claims, so that a terminal can interact with an application or a function in the terminal based on user authorization, replace a user to intelligently handle an application event, and provide proper information and a proper service for the user, thereby improving user experience.

According to a first aspect, an embodiment of the present invention provides a method for intelligently handling an application event, and the method includes:
receiving an application handling authorization instruction entered by a user, where the application handling authorization instruction includes an identifier of an application program in a terminal;
accessing the application program based on the identifier of the application program, and obtaining information about a to-be-handled application event from the application program;
sending a notification message to a cloud server, where the notification message includes the information about the to-be-handled application event;
receiving a feedback message sent by the cloud server, where the feedback message includes event execution information, of the information about the to-be-handled application event, obtained by the cloud server based on user online virtual data; and
correspondingly executing the application event based on the event execution information.

With reference to the first aspect, in a first implementation of the first aspect, before the receiving an application handling authorization instruction entered by a user, the method further includes:
receiving an application accessing authorization instruction entered by the user, where the application accessing authorization instruction includes the identifier of the application program;
when it is detected that the application program is started, determining whether the application program is authorized to be accessed;
if it is determined that the application program is authorized to be accessed, accessing the application program based on the identifier of the application program and obtaining user original data in the application program;
collecting statistics about the user original data to obtain user characteristic data; and
sending the user characteristic data to the cloud server according to a preset sending rule, so that the cloud server sends the user characteristic data to a big data system module, where the user characteristic data is used to enable the big data system module to generate the user online virtual data that matches the user.

With reference to the first possible implementation of the first aspect, in a second implementation, the method further includes:
determining whether the application program has stopped running; and
if the application program has stopped running, stopping obtaining the user original data in the application program.

With reference to the first possible implementation of the first aspect, in a third implementation, the collecting statistics about the user original data to obtain user characteristic data specifically includes:
determining a common characteristic of the user original data; and
collecting statistics about the user original data by using the common characteristic to obtain the user characteristic data.

With reference to the first aspect, in a fourth implementation, the method further includes: displaying an execution result of the application event.

According to a second aspect, an embodiment of the present invention provides a method for intelligently handling an application event, and the method includes:
receiving a notification message sent by a terminal, where the notification message includes information about a to-be-handled application event in an application program in the terminal;
obtaining event execution information of the information about the to-be-handled application event based on stored user online virtual data; and
sending a feedback message to the terminal, where the feedback message includes the event execution information, and the event execution information is used to enable the terminal to correspondingly execute the application event.

With reference to the second aspect, in a first possible implementation of the second aspect, before the receiving a notification message sent by a terminal, the method further includes:
receiving user characteristic data sent by the terminal;
sending the user characteristic data to a big data system module;
receiving the user online virtual data that matches a user and that is formed after the big data system module performs statistics collection and classification on the user characteristic data; and
storing the user online virtual data.

With reference to the second aspect, in a second possible implementation of the second aspect, the notification message further includes an identifier of the terminal; and
before the obtaining event execution information of the information about the to-be-handled application event based on stored user online virtual data, the method further includes:
obtaining, based on the identifier of the terminal, the user online virtual data that matches the identifier of the terminal.

With reference to the second aspect, in a third possible implementation of the second aspect, the user online virtual data comprises a user profile, user association information, and user behavior information;; and
the obtaining event execution information of the information about the to-be-handled application event based on stored user online virtual data specifically includes :
determining, from the user profile, the user association information, and the user behavior information based on the information about the to-be-handled application event, the event execution information that matches the information about the to-be-handled application event.

According to a third aspect, an embodiment of the present invention provides an apparatus for intelligently handling an application event, and the apparatus is applied to a terminal, and includes:
a receiving unit, configured to receive an application handling authorization instruction entered by a user, where the application handling authorization instruction includes an identifier of an application program in the terminal;
a first obtaining unit, configured to: access the application program based on the identifier of the application program, and obtain information about a to-be-handled application event from the application program;
a sending unit, configured to send a notification message to a cloud server, where the notification message includes the information about the to-be-handled application event, where
the receiving unit is further configured to receive a feedback message sent by the cloud server, where the feedback message includes event execution information, of the information about the to-be-handled application event, obtained by the cloud server based on user online virtual data; and
an execution unit, configured to correspondingly execute the application event based on the event execution information.

With reference to the third aspect, in a first possible implementation of the third aspect, the receiving unit is further configured to receive an application accessing authorization instruction entered by the user, where the application accessing authorization instruction includes the identifier of the application program; and
the apparatus further includes: a determining unit, configured to: when the apparatus detects that the application program is started, determine whether the apparatus has been authorized by the user to access the application program;
a second obtaining unit, configured to: if the apparatus determines that the apparatus has been authorized by the user to access the application program, access the application program based on the identifier of the application program and obtain user original data in the application program; and
a statistics collection unit, configured to collect statistics about the user original data to obtain user characteristic data, where
the sending unit is further configured to send the user characteristic data to the cloud server according to a preset sending rule, so that the cloud server sends the user characteristic data to a big data system module, where the user characteristic data is used to enable the big data system module to generate the user online virtual data that matches the user.

With reference to the first possible implementation of the third aspect, in a second possible implementation, the apparatus further includes:
a judging unit, configured to determine whether the application program has stopped running; and
the second obtaining unit is further configured to: if the application program has stopped running, stop obtaining the user original data in the application program.

With reference to the first possible implementation of the third aspect, in a third possible implementation, the statistics collection unit is specifically configured to: determine a common characteristic of the user original data; and
collect statistics about the user original data by using the common characteristic to obtain the user characteristic data.

With reference to the third aspect, in a fourth possible implementation, the apparatus further includes: a display unit, configured to display an execution result of the application event.

According to a fourth aspect, an embodiment of the present invention provides an apparatus for intelligently handling an application event, and the apparatus is applied to a server, and includes:
a receiving unit, configured to receive a notification message sent by a terminal, where the notification message includes information about a to-be-handled application event in an application program in the terminal;
an obtaining unit, configured to obtain event execution information of the information about the to-be-handled application event based on stored user online virtual data; and
a sending unit, configured to send a feedback message to the terminal, where the feedback message includes the event execution information, and the event execution information is used to enable the terminal to correspondingly execute the application event.

With reference to the fourth aspect, in a first possible implementation of the fourth aspect, the receiving unit is further configured to receive user characteristic data sent by the terminal;
the sending unit is further configured to send the user characteristic data to a big data system module;
the receiving unit is further configured to receive the user online virtual data that matches a user and that is formed after the big data system module performs statistics collection and classification on the user characteristic data; and
the apparatus further includes: a storage unit, configured to store the user online virtual data.

With reference to the fourth aspect, in a second possible implementation of the fourth aspect, the notification message received by the receiving unit further includes an identifier of the terminal; and
the obtaining unit is further configured to obtain, based on the identifier of the terminal, the user online virtual data that matches the identifier of the terminal.

With reference to the first possible implementation of the fourth aspect, in a third possible implementation, the user online virtual data stored in the storage unit includes a user profile, user association information, and user behavior information; and
the obtaining unit is specifically configured to determine, from the user profile, the user association information, and the user behavior information based on the application event information, the event execution information that matches the application event information.

According to a fifth aspect, an embodiment of the present invention provides a terminal, where the terminal includes a radio frequency module, a processor, a touchscreen controller, and a touch display screen;
the touch display screen is configured to: receive an application handling authorization instruction entered by a user, and transmit the application handling authorization instruction to the touchscreen controller, where the application handling authorization instruction includes an identifier of an application program in the terminal;
the touchscreen controller is configured to: receive the application handling authorization instruction transmitted by the touch display screen, and transmit the application handling authorization instruction to the processor;
the processor is configured to: receive the application handling authorization instruction transmitted by the touchscreen controller, access the application program based on the identifier of the application program, and obtain information about a to-be-handled application event from the application program;
the processor is further configured to: generate a notification message, and transmit the notification message to the radio frequency module, where the notification message includes the application event information;
the radio frequency module is configured to: receive the notification message transmitted by the processor and send the notification message to a cloud server, and receive a feedback message sent by the cloud server and transmit the feedback message to the processor, where the feedback message includes event execution information, of the application event information, obtained by the cloud server based on user online virtual data; and
the processor is further configured to: receive the feedback message transmitted by the radio frequency module, and correspondingly execute the application event based on the event execution information.

With reference to the fifth aspect, in a first possible implementation of the fifth aspect, the touch display screen is further configured to: receive an application accessing authorization instruction entered by the user, and transmit the application accessing authorization instruction to the touchscreen controller, where the application accessing authorization instruction includes the identifier of the application program;
the touchscreen controller is further configured to: receive the application accessing authorization instruction transmitted by the touch display screen, and transmit the application accessing authorization instruction to the processor;
the processor is further configured to: receive the application accessing authorization instruction transmitted by the touchscreen controller; detect whether the application program is started; when detecting that the application program is started, determine whether the processor has been authorized by the user to access the application program; if determining that the processor has been authorized by the user to access the application program, access the application program based on the identifier of the application program, and obtain user original data in the application program; and collect statistics about the user original data to obtain user characteristic data, and transmit the user characteristic data to the radio frequency module; and
the radio frequency module is further configured to: receive the user characteristic data transmitted by the processor, and send the user characteristic data to the cloud server according to a preset sending rule, so that the cloud server sends the user characteristic data to a big data system module, where the user characteristic data is used to enable the big data system module to form the user online virtual data that matches the user.

With reference to the first possible implementation of the fifth aspect, in a second possible implementation, the processor is further configured to: determine whether the application program has stopped running, and if the application program has stopped running, stop obtaining the user original data in the application program.

With reference to the first possible implementation of the fifth aspect, in a third possible implementation, the processor is further specifically configured to: determine a common characteristic of the user original data, and collect statistics about the user original data by using the common characteristic of the user original data to obtain the user characteristic data.

With reference to the fifth aspect, in a fourth possible implementation, the processor is further configured to transmit an execution result of the application event to the touchscreen controller;
the touchscreen controller is further configured to: receive the execution result transmitted by the processor, and transmit the execution result to the touch display screen; and
the touch display screen is further configured to: receive the execution result transmitted by the touchscreen controller, and display the execution result.

According to a sixth aspect, an embodiment of the present invention provides a cloud server, and the cloud server includes:
a receiver, configured to receive a notification message sent by a terminal, where the notification message includes information about a to-be-handled application event in an application program in the terminal;
a processor, configured to obtain event execution information of the application event information based on stored user online virtual data; and
a transmitter, configured to send a feedback message to the terminal, where the feedback message includes the event execution information, and the event execution information is used to enable the terminal to correspondingly execute the application event based on the event execution information.

With reference to the sixth aspect, in a first possible implementation of the sixth aspect, the receiver is further configured to receive user characteristic data sent by the terminal;
the transmitter is further configured to send the user characteristic data to a big data system module;
the receiver is further configured to receive the user online virtual data that matches a user and that is formed after the big data system module performs statistics collection and classification on the user characteristic data; and
the processor is further configured to store the user online virtual data.

With reference to the sixth aspect, in a second possible implementation of the sixth aspect, the notification message received by the receiver further includes an identifier of the terminal; and
the processor is further configured to obtain, based on the identifier of the terminal, the user online virtual data that matches the identifier of the terminal.

With reference to the sixth aspect, in a third possible implementation of the sixth aspect, the user online virtual data includes a user profile, user association information, and user behavior information; and
the processor is further specifically configured to determine, from the user profile, the user association information, and the user behavior information based on the application event information, the event execution information that matches the application event information.

According to a seventh aspect, an embodiment of the present invention provides a computer readable storage medium, the computer readable storage medium stores a computer program, and the computer program is executed by a processor included in a terminal, to perform the method according to the foregoing aspects.

According to an eighth aspect, an embodiment of the present invention provides a computer readable storage medium, the computer readable storage medium stores a computer program, and the computer program is executed by a processor included in a cloud server, to perform the method according to the foregoing aspects.

Compared with the prior art, in the solutions provided in the embodiments of the present invention, the following prior-art case is avoided: An intelligent assistant provides information or a service for the user only after the user gives a requirement instruction, and cannot provide a most proper service for the user because the intelligent assistant cannot interact with an application or a function in the terminal. In this way, the terminal can interact with the application or function in the terminal based on user authorization, replace the user to handle an application event, and provide proper information and a proper service for the user, thereby improving user experience.

### BRIEF DESCRIPTION OF DRAWINGS

FIG. 1 is a schematic diagram of a system architecture for intelligently handling an application event according to an embodiment of the present invention;
FIG. 2 is a schematic structural diagram of a terminal according to an embodiment of the present invention;
FIG. 3 is a schematic structural diagram of a cloud server according to an embodiment of the present invention;
FIG. 4A and FIG. 4B are a schematic diagram of intelligent assistant clients in a terminal and a cloud server according to an embodiment of the present invention;
FIG. 5 is a flowchart of a method for intelligently handling an application event according to an embodiment of the present invention;
FIG. 6 is a flowchart of another method for intelligently handling an application event according to an embodiment of the present invention;
FIG. 7A and FIG. 7B are a flowchart of performing data collection and analysis by a first intelligent assistant client according to an embodiment of the present invention;
FIG. 8 is a flowchart of forming user online virtual data by a second intelligent assistant client according to an embodiment of the present invention;
FIG. 9 is a flowchart of intelligently handling an application event by an intelligent assistant client according to an embodiment of the present invention;
FIG. 10 is a schematic structural diagram of an apparatus for intelligently handling an application event according to an embodiment of the present invention; and
FIG. 11 is a schematic structural diagram of another apparatus for intelligently handling an application event according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

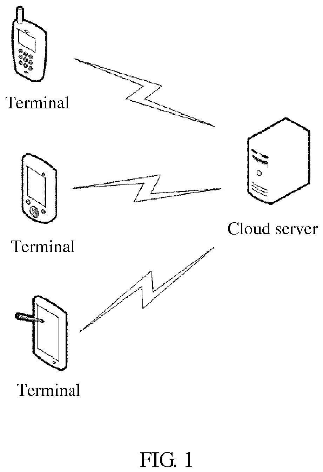

FIG. 1 is a schematic diagram of a system architecture for intelligently handling an application event according to an embodiment of the present invention. The system architecture provided in this embodiment of the present invention includes a plurality of terminals and a cloud server.

In this embodiment of the present invention, the terminal may be specifically an intelligent terminal that has a function of receiving and transmitting, processing, and displaying a message, and the intelligent terminal may be a smartphone, a tablet computer, a wearable device, and the like.

As shown in FIG. 1, the plurality of terminals access the cloud server by using a wireless network. The cloud server communicates and interact with the terminal. For example, the cloud server sends a control instruction to the terminal, and receives an execution result sent by the terminal.

In this embodiment of the present invention, the terminal accesses an application program according to an application handling authorization instruction entered by a user, and obtains information about a to-be-handled application event from the application program. The terminal sends the application event information to the cloud server, and the terminal correspondingly executes the application event based on event execution information fed back by the cloud server, and displays an execution result. The terminal interacts with an application or a function in the terminal according to user authorization, and replaces the user to handle the application event, and provides proper information and a proper service to the user, thereby improving user experience.

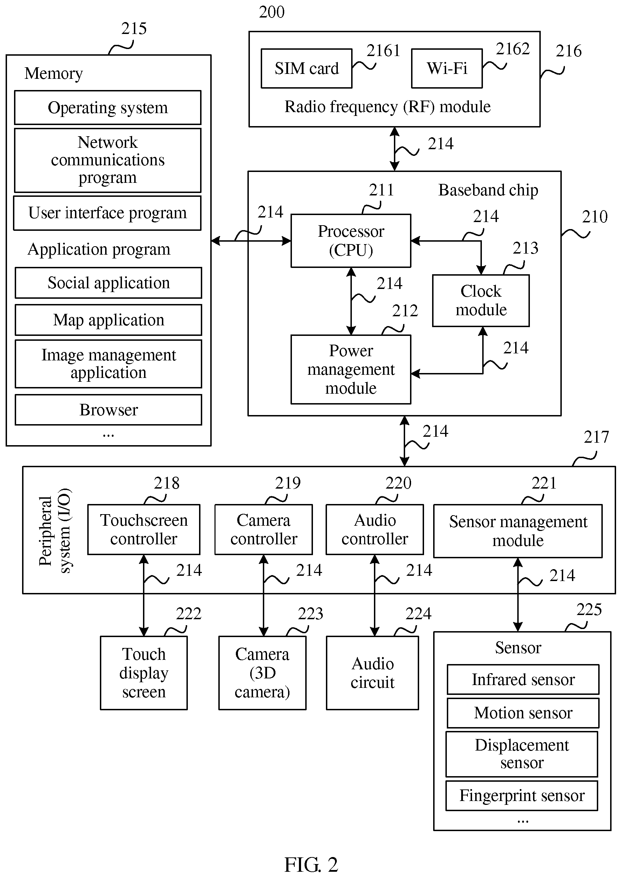

FIG. 2 is a schematic structural diagram of a terminal according to an embodiment of the present invention. The terminal 200 may include a baseband chip 210, a memory 215 (one or more computer readable storage media), a radio frequency (RF) module 216, and a peripheral system 217. These components may communicate with each other by using one or more communications buses 214.

The peripheral system 217 is mainly configured to implement an interaction function between the terminal 200 and a user/an external environment, and includes an input/output apparatus of the terminal 200. In some embodiments, the peripheral system 217 may include a touchscreen controller 218, a camera controller 219, an audio controller 220, and a sensor management module 221. The controllers may be coupled to respective peripheral devices (for example, a touch display screen 222, a camera 223, an audio frequency circuit 224, and a sensor 225). In some embodiments, the camera 223 may be a 3D camera. It should be noted that the peripheral system 217 may further include another I/O peripheral device.

The touch display screen 222 may be configured to display information entered by the user or display information to the user. For example, various menus of the terminal 200 and an interface of a running application program may be displayed, such as a button (Button), a text input box (Text), a scroll bar (Scroll Bar), and a menu (Menu). The touch display screen 222 may include a touch panel and a display panel. Optionally, the display panel may be configured in a form of a liquid crystal display (English: Liquid Crystal Display, LCD for short), an organic light-emitting diode (English: Organic Light-Emitting Diode, OLED for short), or the like. Further, the touch panel may cover the display panel. When detecting a touch operation on or near the touch panel, the touch panel sends the touch operation to a processor 211 to determine a type of a touch event, and then the processor 211 provides corresponding visual output on the display panel based on the type of the touch event. Although the touch panel and the display panel are used as two independent components to implement input and output functions of the terminal 200, in some embodiments, the touch panel and the display panel may be integrated to implement the input and output functions of the terminal 200.

The baseband chip 210 may include one or more processors 211, a clock module 212, and a power management module 213 through integration. The clock module 212 integrated into the baseband chip 210 is mainly configured to generate a clock required for data transmission and time sequence control for the processor 211. The power management module 213 integrated into the baseband chip 210 is mainly configured to provide stable and high-precision voltage for the processor 211, the radio frequency module 216, and the peripheral system.

The radio frequency (RF) module 216 is configured to receive and send a radio frequency signal, and mainly integrates a receiver and a transmitter of the terminal 200. The radio frequency (RF) module 216 communicates with a communications network and another communications device by using the radio frequency signal. In some embodiments, the radio frequency (RF) module 216 may include but is not limited to an antenna system, an RF transceiver, one or more amplifiers, a tuner, one or more oscillators, a digital signal processor, a CODEC chip, a SIM card, a storage medium, and the like. In some embodiments, the radio frequency (RF) module 216 may be implemented on a separate chip. Generally, the radio frequency module may perform wireless transmission, such as Bluetooth (English: Bluetooth) transmission, Wireless Fidelity (English: Wireless Fidelity, Wi-Fi for short) transmission, 3rd Generation Mobile Communications (English: 3rd-Generation, 3G for short) transmission, 4th Generation Mobile Communications (English: the 4th Generation mobile communication, 4G for short) transmission, and Zigbee (Zigbee).

The memory 215 is coupled to the processor 211 and is configured to store various software programs and/or a plurality of groups of instructions. In some embodiments, the memory 215 may include a high-speed random access memory, and may also include a non-volatile memory, such as one or more disk storage devices, a flash memory, or another non-volatile solid-state storage device. The memory 215 may store an operating system (system for short), for example, an embedded operating system such as Android, iOS, Windows, or Linux.

The memory 215 may further store a network communications program, and the network communications program may be used to communicate with one or more terminals. The memory 215 may further store a user interface program. The user interface program may vividly display content of an application program by using a graphical operation interface, and receive, by using an input control such as a menu, a dialog box, and a key, a control operation performed on the application program by a user.

The memory 215 may further store one or more application programs. As shown in FIG. 2, the application programs may include a social application program (for example, Facebook), an image management application program (for example, Album), a map application program (for example, Google Map), a browser (for example, Safari or Google Chrome), and the like.

The terminal 200 provided in this embodiment of the present invention is merely an example provided in this embodiment of the present invention. In addition, the terminal 200 may include more or fewer components than shown components, or may combine two or more components, or may have different component configurations.

In addition, the terminal 200 provided in the foregoing embodiment is configured to perform a method for intelligently handling an application event in this embodiment of the present invention.

It can be understood that the memory 215 stores various software programs and/or a plurality of groups of instructions. The following radio frequency module 216, the processor 211, the touchscreen controller 218, and the touch display screen 222 implement a function of the terminal by invoking the various software programs and/or the plurality of groups of instructions in the memory 215.

Specifically, the touch display screen 222 receives an application handling authorization instruction entered by a user, and transmits the application handling authorization instruction to the touchscreen controller 218. The application handling authorization instruction includes an identifier of an application program in the terminal. The touchscreen controller 218 receives the application handling authorization instruction transmitted by the touch display screen 222 and transmits the application handling authorization instruction to the processor 211.

The processor 211 receives the application handling authorization instruction transmitted by the touchscreen controller 218, obtains the identifier of the application program from the application handling authorization instruction, accesses the application program based on the identifier of the application program, and obtains information about a to-be-handled application event from the application program. The processor 211 generates a notification message, adds the application event information to the notification message, and transmits the notification message to the radio frequency module 216.

The radio frequency module 216 receives the notification message transmitted by the processor 211, and sends the notification message to a cloud server. The notification message includes the application event information.

The radio frequency module 216 receives a feedback message sent by the cloud server and transmits the feedback message to the processor 211. The feedback message includes event execution information, of the application event information, obtained by the cloud server based on user online virtual data.

The processor 211 receives the feedback message transmitted by the radio frequency module 216, obtains the event execution information from the feedback message, and correspondingly executes the application event based on the event execution information.

Further, the touch display screen 222 receives an application accessing authorization instruction entered by the user, and transmits the application accessing authorization instruction to the touchscreen controller 218. The application accessing authorization instruction includes the identifier of the application program. The touchscreen controller 218 receives the application accessing authorization instruction transmitted by the touch display screen 222 and transmits the application accessing authorization instruction to the processor 211.

The processor 211 further receives the application accessing authorization instruction transmitted by the touchscreen controller 218, and obtains the identifier of the application program from the application accessing authorization instruction. The processor 211 further detects whether the application program is started. When the processor 211 detects that the application program is started, the processor 211 determines whether the processor 211 has been authorized by the user to access the application program. If the processor 211 determines that the processor 211 has been authorized by the user to access the application program, the processor 211 accesses the application program based on the identifier of the application program and obtains user original data in the application program. The processor 211 collects statistics about the user original data to obtain user characteristic data. The processor 211 transmits the user characteristic data to the radio frequency module 216.

The radio frequency module 216 further receives the user characteristic data transmitted by the processor 211, and sends the user characteristic data to the cloud server according to a preset sending rule, so that the cloud server sends the user characteristic data to a big data system module. The user characteristic data is used to enable the big data system module to form the user online virtual data that matches the user.

Further, the processor 211 determines whether the application program has stopped running. If the application program has stopped running, the processor 211 stops obtaining the user original data in the application program.

Further, that the processor 211 collects statistics about the user original data to obtain user characteristic data is specifically: The processor 211 determines a common characteristic of the user original data; and the processor 211 collects statistics about the user original data by using the common characteristic of the user original data to obtain the user characteristic data.

Further, the processor 211 transmits an execution result of the application event to the touchscreen controller 218.

The touchscreen controller 218 receives the execution result transmitted by the processor 211 and transmits the execution result to the touch display screen 222. The touch display screen 222 receives the execution result transmitted by the touchscreen controller 218, and displays the execution result, so that the user sees the execution result.

Therefore, when the terminal provided in this embodiment of the present invention is applied, the terminal accesses the application program according to the application handling authorization instruction entered by the user, and obtains the information about the to-be-handled application event from the application program; the terminal sends the application event information to the cloud server; and the terminal correspondingly executes the application event based on the event execution information fed back by the cloud server, and displays the execution result. In the solution provided in this embodiment of the present invention, the following prior-art case is avoided: An intelligent assistant provides information or a service for the user only after the user gives a requirement instruction, and cannot provide a most proper service for the user because the intelligent assistant cannot interact with an application or a function in the terminal. In this way, the terminal can interact with the application or function in the terminal based on user authorization, replace the user to intelligently handle an application event, and provide proper information and a proper service for the user, thereby improving user experience.

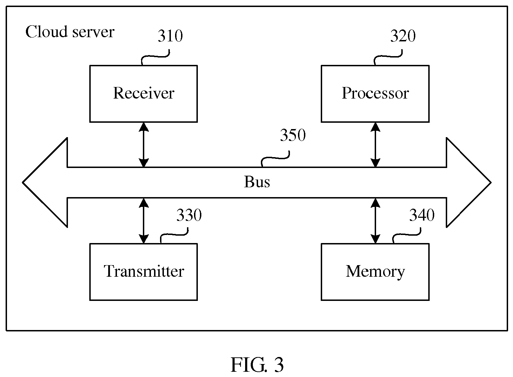

FIG. 3 is a schematic structural diagram of a cloud server according to an embodiment of the present invention. The cloud server 300 may include a receiver 310, a processor 320, a transmitter 330, and a memory 340 (one or more readable storage media). These components may communicate with each other by using one or more communications buses 350.

The bus 350 may be a peripheral component interconnect (English: peripheral component interconnect, PCI for short) bus, an extended industry standard architecture (English: extended industry standard architecture, EISA for short) bus, or the like. The bus may be categorized as an address bus, a data bus, a control bus, or the like. For ease of indication, the bus is indicated by using only one bold line in FIG. 3. However, it does not indicate that there is only one bus or only one type of bus.

The receiver 310 and the transmitter 330 are communications interfaces for communicating and interacting with another device by the cloud server, and may be a wired communications interface, a wireless communications interface, or a combination thereof. The wired communications interface may be, for example, an Ethernet interface. The Ethernet interface may be an optical interface, an electrical interface, or a combination thereof. The wireless communications interface may be a WLAN interface, a cellular network communications interface, a combination thereof, or the like.

The processor 320 may be a central processing unit (English: central processing unit, CPU for short), a network processor (English: network processor, NP for short), or a combination of a CPU and an NP.

The processor 320 may further include a hardware chip. The hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof.

The memory 340 may include a volatile memory (English: volatile memory) such as a random-access memory (English: random-access memory, RAM for short). Alternatively, the memory may include a non-volatile memory (English: non-volatile memory) such as a flash memory (English: flash memory), a hard disk (English: hard disk drive, HDD for short), or a solid-state drive (English: solid-state drive, SSD for short). Alternatively, the memory 340 may include a combination of the foregoing types of memories.

The memory 340 may be further configured to store a program instruction. When the processor 320 is a CPU, the processor 320 invokes the program instruction stored in the memory 340. When the processor 320 is hardware such as an FPGA or an ASIC, the processor 320 does not need the program instruction stored in the memory 340. A skilled person may directly write a program instruction into a hardware processor of the FPGA or the ASIC, and the FPGA or the ASIC may directly execute the program instruction.

In addition, the cloud server provided in the foregoing embodiment is configured to perform a method for intelligently handling an application event in this embodiment of the present invention.

Specifically, the receiver 310 receives a notification message sent by a terminal, and transmits the notification message to the processor 320. The notification message includes information about a to-be-handled application event in an application program in the terminal.

The processor 320 receives the notification message transmitted by the receiver 310 and obtains the application event information from the notification message. The processor 320 invokes stored user online virtual data from the memory 340 and obtains event execution information of the application event information. The processor 320 generates a feedback message, adds the event execution information to the feedback message, and transmits the feedback message to the transmitter 330.

The transmitter 330 receives the feedback message transmitted by the processor 320, and sends the feedback message to the terminal. The feedback message includes the event execution information, and the event execution information is used to enable the terminal to correspondingly execute the application event based on the event execution information.

Further, the receiver 310 receives user characteristic data sent by the terminal, and transmits the user characteristic data to the processor 320. The processor 320 receives the user characteristic data transmitted by the receiver 310, and after determining that the user characteristic data is received, transmits the user characteristic data to the transmitter 330.

The transmitter 330 further receives the user characteristic data transmitted by the processor 320, and sends the user characteristic data to a big data system module.

The receiver 310 further receives the user online virtual data that matches a user and that is formed after the big data system module performs statistics collection and classification on the user characteristic data. The receiver 310 transmits the user online virtual data to the processor 320.

The processor 320 further receives the user online virtual data transmitted by the receiver 310 and stores the user online virtual data in the memory 340.

Further, the notification message received by the receiver 310 includes an identifier of the terminal. The processor 320 further obtains, based on the identifier of the terminal, the user online virtual data that matches the identifier of the terminal.

Further, the user online virtual data stored in the memory 340 includes a user profile, user association information, and user behavior information. That the processor 320 obtains event execution information of the application event information based on the user online virtual data is specifically:

The processor 320 determines, from the user profile, the user association information, and the user behavior information based on the application event information, the event execution information that matches the application event information.

Therefore, when the cloud server provided in this embodiment of the present invention is applied, the cloud server obtains the event execution information of the application event information based on the stored user online virtual data, and sends the event execution information to the terminal, so that the terminal correspondingly executes the application event based on the event execution information, and displays an execution result. In the solution provided in this embodiment of the present invention, the following prior-art case is avoided: An intelligent assistant provides information or a service for the user only after the user gives a requirement instruction, and cannot provide a most proper service for the user because the intelligent assistant cannot interact with an application or a function in the terminal. In this way, the terminal can interact with the application or function in the terminal based on user authorization, replace the user to intelligently handle an application event, and provide proper information and a proper service for the user, thereby improving user experience.

In the foregoing embodiments, each component in the terminal 200 and the cloud server 300 executes a corresponding program instruction, so that the terminal 200 and the cloud server 300 can intelligently handle an application event. An intelligent assistant client may be further disposed in the terminal 200 or the cloud server 300. The intelligent assistant client may be a programmatic software module. The software module may be a program instruction stored in the memory.

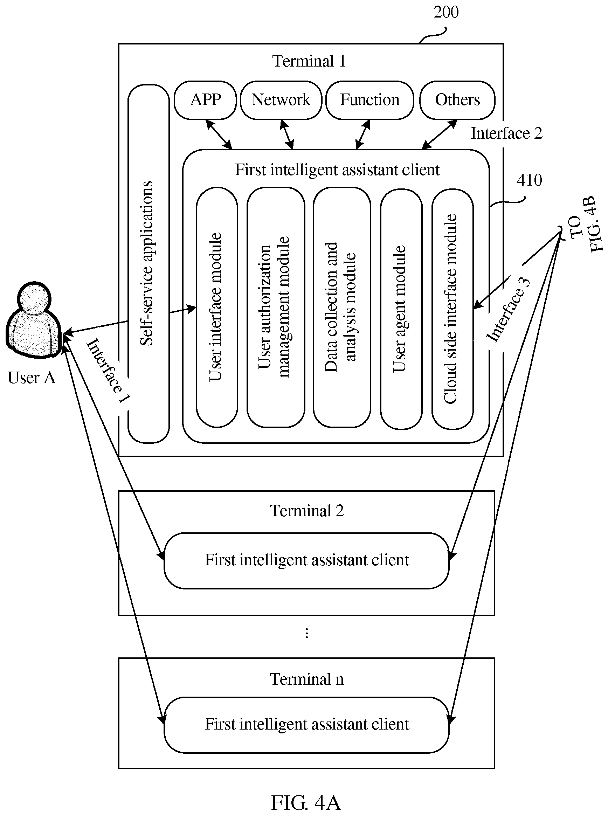

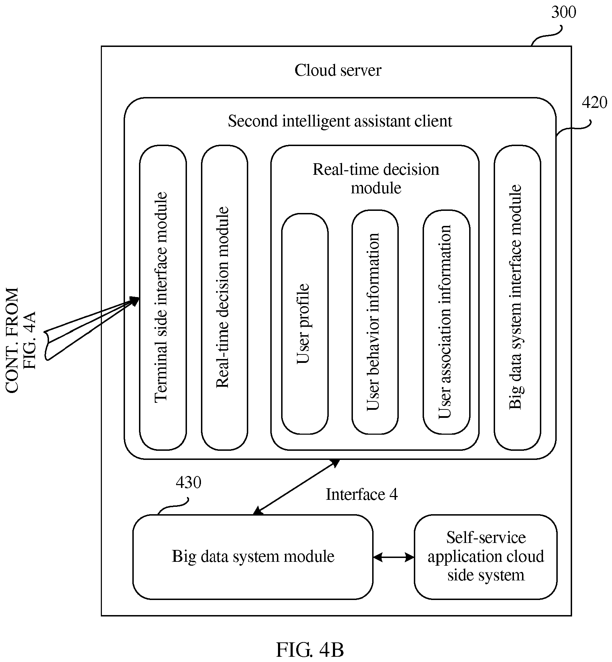

FIG. 4A and FIG. 4B are a schematic diagram of intelligent assistant clients in a terminal and a cloud server according to an embodiment of the present invention. Each terminal 200 includes a first intelligent assistant client 410, and the cloud server 300 includes a second intelligent assistant client 420. A big data system module 430 may be located in the cloud server 300 or in another cloud server. FIG. 4A and FIG. 4B are described by using an example in which the big data system module 430 is located in the cloud server 300.

After the terminal 200 and the cloud server 300 are powered on, the processor 211 in the terminal 200 or the processor 320 in the cloud server 300 enables the respective intelligent assistant client by invoking the program instruction stored in the memory, and the first intelligent assistant client and the second intelligent assistant client intelligently handle an application event.

Specifically, the first intelligent assistant client 410 receives an application handling authorization instruction entered by a user. The application handling authorization instruction includes an identifier of an application program in the terminal. The first intelligent assistant client 410 accesses the application program based on the identifier of the application program, and obtains information about a to-be-handled application event from the application program. The first intelligent assistant client 410 sends a notification message to the second intelligent assistant client 420. The notification message includes the application event information.

The second intelligent assistant client 420 receives the notification message sent by the first intelligent assistant client 410. The second intelligent assistant client 420 obtains event execution information of the application event information based on stored user online virtual data. The second intelligent assistant client 420 sends a feedback message to the first intelligent assistant client 410. The feedback message includes the event execution information.

The first intelligent assistant client 410 further receives the feedback message sent by the second intelligent assistant client 420. The first intelligent assistant client 410 correspondingly executes the application event based on the event execution information, and displays an execution result.

Further, the cloud server includes the big data system module 430.

The first intelligent assistant client 410 further receives an application accessing authorization instruction entered by the user. The application accessing authorization instruction includes the identifier of the application program. When the first intelligent assistant client 410 detects that the application program is started, the first intelligent assistant client 410 determines whether the first intelligent assistant client 410 has been authorized by the user to access the application program. If determining that the first intelligent assistant client 410 has been authorized by the user to access the application program, the first intelligent assistant client 410 accesses the application program based on the identifier of the application program and obtains user original data in the application program. The first intelligent assistant client 410 collects statistics about the user original data to obtain user characteristic data. The first intelligent assistant client 410 sends the user characteristic data to the second intelligent assistant client 420 according to a preset sending rule.

The second intelligent assistant client 420 further receives the user characteristic data sent by the first intelligent assistant client 410. The second intelligent assistant client 420 sends the user characteristic data to the big data system module. The second intelligent assistant client 420 receives the user online virtual data that matches the user and that is formed after the big data system module mines the user characteristic data. The second intelligent assistant client 420 stores the user online virtual data.

The big data system module 430 receives the user characteristic data sent by the second intelligent assistant client 420. The big data system module 430 mines the user characteristic data to form the user online virtual data that matches the user. The big data system module 430 sends the user online virtual data to the second intelligent assistant client 420.

Further, that the first intelligent assistant client 410 collects statistics about the user original data to obtain user characteristic data is specifically:

The first intelligent assistant client 410 determines a common characteristic of the user original data, and the first intelligent assistant client 410 collects statistics about the user original data by using the common characteristic to obtain the user characteristic data.

Further, the user online virtual data includes a user profile.

That the big data system module 430 mines the user characteristic data to form the user online virtual data that matches the user is specifically:

The big data system module 430 determines content information of the user characteristic data; the big data system module 430 assigns a label to the user characteristic data by using the content information; and the big data system module 430 forms, by using the label, the user profile that matches the user.

Further, the user online virtual data includes user association information and user behavior information.

That the big data system module 430 mines the user characteristic data to form the user online virtual data that matches the user is specifically:
The big data system module 430 obtains user characteristic data belonging to a user social label from the user profile, and uses the user characteristic data belonging to the user social label as the user association information; and the big data system module 430 obtains user characteristic data belonging to a user behavior label from the user profile, and uses the user characteristic data belonging to the user behavior label as the user behavior information.

In this embodiment of the present invention, the first intelligent assistant client 410 may further include a user interface module, a user authorization management module, a data collection and analysis module, a user agent module, and a cloud side interface module. It can be understood that the user interface module, the user authorization management module, the data collection and analysis module, the user agent module, and the cloud side interface module are programmatic software modules.

The user interface module is configured to provide a man-machine interaction interface for interaction with the user, for example, a GUI or a CUI. The user authorization management module is configured to manage user authorization for each application in the terminal 200. The data collection and analysis module is configured to: collect user original data in each application in the terminal 200 in various preset manners, and obtain user characteristic data through statistics collection and analysis on the user original data. The user agent module is configured to: under user authorization, act as an agent of the user to trigger various operation commands in the application and interact with the application. The cloud side interface module is configured to exchange information with the second intelligent assistant client 420 in the cloud server 300.

The second intelligent assistant client 420 may further include a terminal side interface module, a real-time decision module, a user intelligence center module, and a big data system interface module. It can be understood that the terminal side interface module, the real-time decision module, the user intelligence center module, and the big data system interface module are programmatic software modules.

The terminal side interface module is configured to exchange information with the first intelligent assistant client 410 in the terminal 200. The real-time decision module is configured to: perform real-time decision based on the application event information sent by the first intelligent assistant client 410, and send the event execution information to the first intelligent assistant client 410. The user intelligence center module is configured to form, based on the user characteristic data sent by the first intelligent assistant client 410, the user online virtual data that matches the user. The big data system interface module is configured to exchange information with the big data system module 430.

In FIG. 4A and FIG. 4B, an interface 1 is an interface between the user and the first intelligent assistant client 410. The interface 1 is used by the user to authorize the first intelligent assistant client 410 to understand and obtain user original data in various application programs, and is used by the first intelligent assistant client 410 to interact with the user in various manners (such as voice and text).

An interface 2 is an interface between the first intelligent assistant client 410 and the various application programs in the terminal. The interface 2 is used by the first intelligent assistant client 410 to obtain the user original data from the application program after the user authorizes the first intelligent assistant client 410. In addition, under user authorization, the first intelligent assistant client 410 may further trigger various operation commands in the application program and interact with the application program.

An interface 3 is an interface between the first intelligent assistant client 410 and the second intelligent assistant client 420. The interface 3 is used by the first intelligent assistant client 410 to communicate and interact with the second intelligent assistant client 420.

An interface 4 is an interface between the second intelligent assistant client 420 and the big data system module 430. The interface 4 is used by the second intelligent assistant client 420 to communicate and interact with the big data system module.

It should be noted that all of the interface 1 to the interface 4 may be existing interfaces.

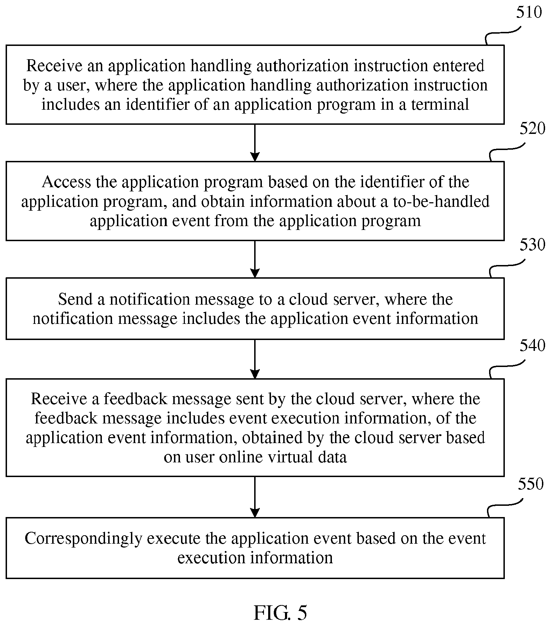

The following describes the solution provided in an embodiment of the present invention with reference to FIG. 5. FIG. 5 is a flowchart of a method for intelligently handling an application event according to this embodiment of the present invention. In this embodiment of the present invention, the method is performed by a terminal, and specifically includes the following steps.

Step 510: Receive an application handling authorization instruction entered by a user, where the application handling authorization instruction includes an identifier of an application program in the terminal.

Specifically, when the user expects that the terminal replaces the user to handle some transactions (for example, receive a package), the user enters the application handling authorization instruction into the terminal. The application handling authorization instruction includes the identifier of the application program in the terminal.

Step 520: Access the application program based on the identifier of the application program, and obtain information about a to-be-handled application event from the application program.

Specifically, the terminal obtains the identifier of the application program from the application handling authorization instruction. The terminal accesses the application program based on the identifier of the application program, and obtains the information about the to-be-handled application event from the application program.

The terminal obtains application data through at least one of reading, packet capture analysis, screen capture identification, and crawler analysis on data in the application program. After obtaining the application data, the terminal generates the application event information, and includes the obtained application data in the application event information.

Step 530: Send a notification message to a cloud server, where the notification message includes the application event information.

Specifically, after generating the application event information, the terminal sends the notification message to the cloud server, and the notification message includes the application event information.

In this embodiment of the present invention, the notification message further includes an identifier of the terminal, and the identifier of the terminal is used to enable the cloud server to obtain, from a database based on the identifier of the terminal, user online virtual data that matches the identifier of the terminal.

Step 540: Receive a feedback message that is sent after the cloud server handles the application event information based on user online virtual data, where the feedback message includes event execution information.

Specifically, after receiving the notification message, the cloud server obtains the application event information and the identifier of the terminal from the notification message. The cloud server obtains, from the database based on the identifier of the terminal, the user online virtual data that matches the identifier of the terminal. The cloud server obtains, based on the user online virtual data, the event execution information corresponding to the application event information.

The cloud server generates the feedback message, and the feedback message includes the event execution information. The cloud server sends the feedback message to the terminal.

Step 550: Correspondingly execute the application event based on the event execution information.

Specifically, after receiving the feedback message, the terminal obtains the application event execution information from the feedback message, and the terminal correspondingly executes the application event based on the event execution information.

Therefore, when the method for intelligently handling an application event provided in this embodiment of the present invention is applied, the terminal accesses the application program according to the application handling authorization instruction entered by the user, and obtains the information about the to-be-handled application event from the application program; the terminal sends the application event information to the cloud server; and the terminal correspondingly executes the application event based on the event execution information fed back by the cloud server, and displays an execution result. In the solution provided in this embodiment of the present invention, the following prior-art case is avoided: An intelligent assistant provides information or a service for the user only after the user gives a requirement instruction, and cannot provide a most proper service for the user because the intelligent assistant cannot interact with an application or a function in the terminal. In this way, the terminal can interact with the application or function in the terminal based on user authorization, replace the user to intelligently handle an application event, and provide proper information and a proper service for the user, thereby improving user experience.

Optionally, after step 550 in this embodiment of the present invention, the method further includes a step in which the terminal displays an execution result of the application event after completing execution of the application event. The terminal displays the execution result, so as to notify the user that execution of the to-be-handled application event is completed, and the user can perform a subsequent operation based on the execution result.

Before step 510 in this embodiment of the present invention, the method further includes a step of collecting statistics about obtained user original data in the application program to obtain user characteristic data and sending the user characteristic data to the cloud server. According to this step, after receiving the user characteristic data, the cloud server sends the user characteristic data to a big data system module in the cloud server. The big data system module forms, based on the user characteristic data, the user online virtual data that matches the user, and sends the user online virtual data to the cloud server, so that the cloud server obtains the event execution information based on the user online virtual data after receiving the application event information, and the terminal can replace the user to intelligently handle some transactions, and provide a most proper service for the user, thereby improving user experience.

Specifically, to enable the terminal to access an application program, obtain application program data, and so on, the user authorizes the terminal. The user may simultaneously authorize the terminal to access a plurality of application programs, or may authorize the terminal to access one application program. In this embodiment of the present invention, an example in which the user authorizes the terminal to access one application program is described.

The user authorizes the terminal to access an application program 1. In other words, the user enters an application accessing authorization instruction into the terminal. The application accessing authorization instruction includes an identifier of the application program 1 that can be accessed by the terminal. The user enters a first touch operation into the terminal, and the first touch operation is used to enable the terminal to enable the application program 1. The first touch operation may be a tap operation.

After receiving the application accessing authorization instruction, the terminal obtains the identifier of the to-be-accessed application program 1 from the application accessing authorization instruction. The terminal periodically detects, based on the identifier, whether the application program 1 is enabled. If detecting that the application program 1 is enabled, the terminal determines whether the terminal has been authorized by the user to access the application program 1. The terminal determines, depending on whether the terminal receives the application accessing authorization instruction of the application program 1, whether the terminal has been authorized by the user. If the terminal determines that the terminal has been authorized by the user to access the application program 1 (the terminal has received the application accessing authorization instruction of the application program 1), the terminal accesses the application program 1 based on the identifier of the application program 1 and obtains user original data in the application program 1.

In this embodiment of the present invention, the terminal obtains the user original data through at least one of reading, packet capture analysis, screen capture identification, and crawler analysis on data in the application program 1. The foregoing manners of obtaining the user original data are existing data obtaining manners, and are not described herein.

The terminal collects statistics about the user original data to obtain the user characteristic data. The terminal sends the user characteristic data to the cloud server according to a preset sending rule. After receiving the user characteristic data, the cloud server sends the user characteristic data to the big data system module. The big data system module mines the user characteristic data to obtain the user online virtual data that matches the user. Then the big data system module sends the user online virtual data to the cloud server, and the cloud server stores the user online virtual data.

That the terminal collects statistics about the user original data to obtain the user characteristic data is specifically: The terminal determines a common characteristic of the user original data, and collects statistics about the user original data by using the common characteristic to obtain the user characteristic data.

The sending rule is specifically a sending policy used when the terminal sends the user characteristic data. For example, the terminal sends the user characteristic data within a preset time period; or the transmitted user characteristic data needs to be in a fixed format or the like.

Optionally, after the user characteristic data is sent to the cloud server, the method further includes a step of stopping obtaining the user original data in the application program when it is determined that the application program has stopped running. According to this step, when the application program is running, data is obtained in real time, so that a behavior habit of the user for the application program can be more accurately represented, and accuracy is also provided for the cloud server to form the user online virtual data.

Specifically, the user enters a second touch operation into the terminal, and the second touch operation is used to enable the terminal to close the application program 1 and exit from the application program 1. The second touch operation may be a tap operation. The terminal determines whether the application program 1 has stopped running; and if the application program 1 has stopped running, the terminal stops obtaining the user original data in the application program 1.

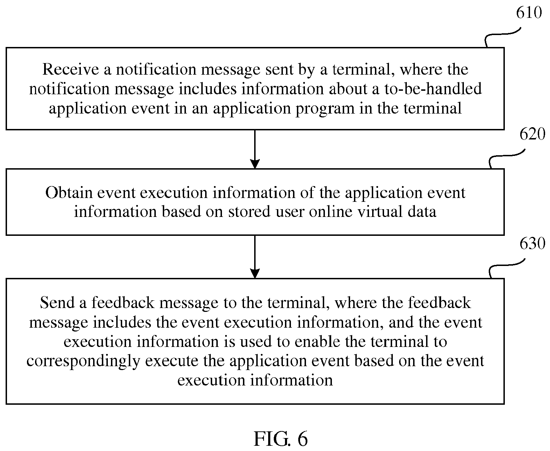

The following describes the solution provided in an embodiment of the present invention with reference to FIG. 6. FIG. 6 is a flowchart of another method for intelligently handling an application event according to this embodiment of the present invention. In this embodiment of the present invention, the method is performed by a cloud server, and specifically includes the following steps.

Step 610: Receive a notification message sent by a terminal, where the notification message includes information about a to-be-handled application event in an application program in the terminal.

Specifically, the terminal sends the notification message to the cloud server, and the notification message includes the information about the to-be-handled application event in the application program in the terminal.

It can be understood that, in step 510 to step 530 in the foregoing embodiment, a process in which the terminal accesses the application program according to the application handling authorization instruction of the user, and obtains the information about the to-be-handled application event from the application program, and the terminal generates the notification message is described in detail, and is not described herein again.

Step 620: Obtain event execution information of the application event information based on stored user online virtual data.

Specifically, after receiving the notification message, the cloud server obtains the application event information from the notification message. The cloud server obtains the user online virtual data from a database based on the application event information, and the cloud server obtains the event execution information of the application event information based on the user online virtual data.

In this embodiment of the present invention, the user online virtual data is specifically data used to describe an attribute, behavior, a social relationship, and the like of the user. The database of the cloud server stores the user online virtual data of the user. The user online virtual data includes a user profile, user association information, and user behavior information. The cloud server determines, from the user profile, the user association information, and the user behavior information based on the application event information, the event execution information that matches the application event information.

The user profile (User Profile), in other words, user information labeling, is a commercial comprehensive description of the user abstracted by collecting and analyzing data of main information such as a social attribute and a living habit of the user. The user association information is a social relationship of the user. The user behavior information is a handling mode in which the user handles transactions.

For example, a user profile of a user A includes a name label, an age label, a photo label, a family status label, an income label, and a job label. User association information includes an address book, communication duration, a consumption object, and the like of the user A. User behavior information includes: When receiving a package, the user A contacts a secretary to fetch the package; when using an application Dianping, the user A makes payment by using Alipay, and so on.

The event execution information is specifically information used to execute the application event, in other words, execution of the application event may be completed by using the event execution information.

For example, the application event information specifically includes: receiving a package, the package, a name and phone number of a courier, and a pickup place. The cloud server first obtains, based on an identifier of the terminal such as a terminal A, user online virtual data that matches the terminal A from the database, such as online virtual data of the user A. The cloud server determines, based on the online virtual data of the user A, that when the user A receives the package, the user A contacts the secretary by using WeChat to fetch the package. In other words, event execution information of receiving the package obtained by the cloud server is contacting the secretary by using WeChat to fetch the package.

Step 630: Send a feedback message to the terminal, where the feedback message includes the event execution information, and the event execution information is used to enable the terminal to correspondingly execute the application event based on the event execution information.

Specifically, after obtaining the event execution information of the application event information, the cloud server generates the feedback message, and adds the event execution information to the feedback message. The cloud server sends the feedback message to the terminal.

The terminal receives the feedback message, and then obtains the application event execution information from the feedback message, and the terminal correspondingly executes the application event based on the event execution information. The terminal displays an execution result of the application event after completing execution of the application event. The terminal displays the execution result, so as to notify the user that execution of the to-be-handled application event is completed, and the user can perform a subsequent operation based on the execution result.

Therefore, when the method for intelligently handling an application event provided in this embodiment of the present invention is applied, the cloud server obtains the event execution information of the application event information based on the stored user online virtual data, and sends the event execution information to the terminal, so that the terminal correspondingly executes the application event based on the event execution information, and displays the execution result. In the solution provided in this embodiment of the present invention, the following prior-art case is avoided: An intelligent assistant provides information or a service for the user only after the user gives a requirement instruction, and cannot provide a most proper service for the user because the intelligent assistant cannot interact with an application or a function in the terminal. In this way, the terminal can interact with the application or function in the terminal based on user authorization, replace the user to intelligently handle an application event, and provide proper information and a proper service for the user, thereby improving user experience.

Optionally, in this embodiment of the present invention, the notification message in step 610 further includes an identifier of the terminal, and the identifier of the terminal is used to enable the cloud server to obtain, from the database based on the identifier of the terminal, the user online virtual data that matches the identifier of the terminal.

Specifically, after receiving the notification message, the cloud server obtains the application event information and the identifier of the terminal from the notification message. The cloud server obtains, from the database based on the identifier of the terminal, the user online virtual data that matches the identifier of the terminal. The user online virtual data is used to enable the cloud server to obtain the event execution information of the application event information.

Optionally, before step 610 in this embodiment of the present invention, the method further includes a step of forwarding, to a big data system module, user characteristic data sent by the terminal, and receiving the user online virtual data that matches the user and that is formed by the big data system module based on the user characteristic data. According to this step, after the application event information sent by the terminal is received, the event execution information is obtained based on the user online virtual data, so that the terminal can replace the user to intelligently handle some transactions, and provide a most proper service for the user, thereby improving user experience.

Specifically, the terminal obtains user original data from the application program, and collects statistics about the user original data to obtain the user characteristic data. The terminal sends the user characteristic data to the cloud server.

In the foregoing embodiment, a detailed process in which the terminal obtains the user original data, collects statistics about the user original data to obtain the user characteristic data, and sends the user characteristic data is described in detail, and is not described herein again.

After receiving the user characteristic data, the cloud server sends the user characteristic data to the big data system module. The big data system module mines the user characteristic data to obtain the user online virtual data that matches the user. The cloud server receives the user online virtual data sent by the big data system module, and stores the user online virtual data.

It can be understood that the cloud server may receive user characteristic data sent by a plurality of terminals, and the plurality of terminals may belong to a same user or different users. The cloud server may first collate and store, in a centralized manner, user characteristic data that belongs to a same user and then send the user characteristic data to the big data system module.

After receiving the user online virtual data, the cloud server stores the user online virtual data and the matched user in the database in a form of a table.

In the prior art, the big data system module mines the user characteristic data to obtain the user online virtual data that matches the user, and this is not described herein.

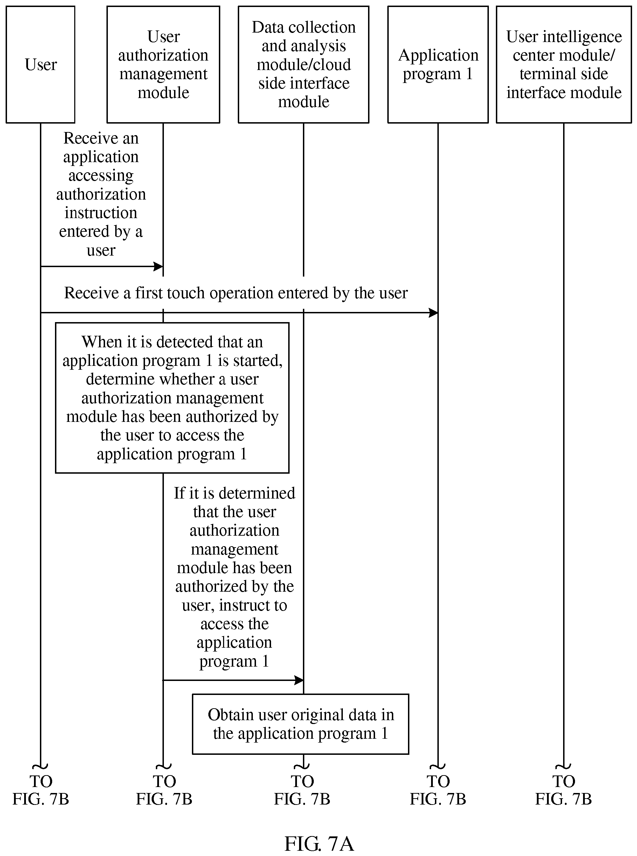

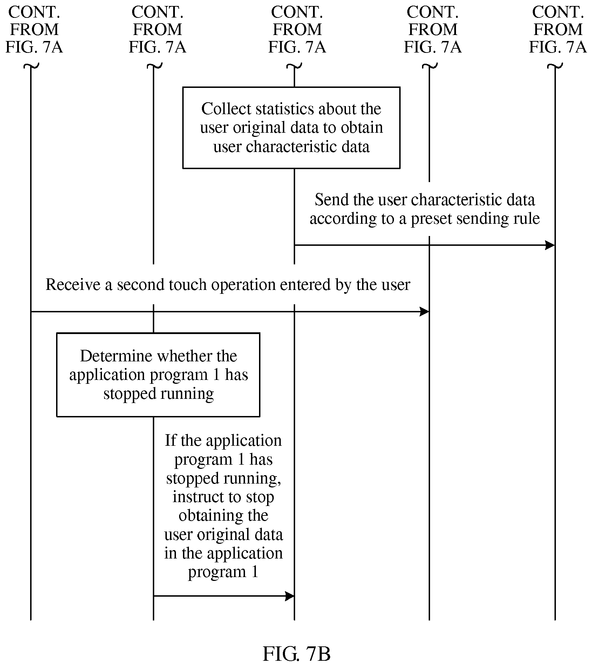

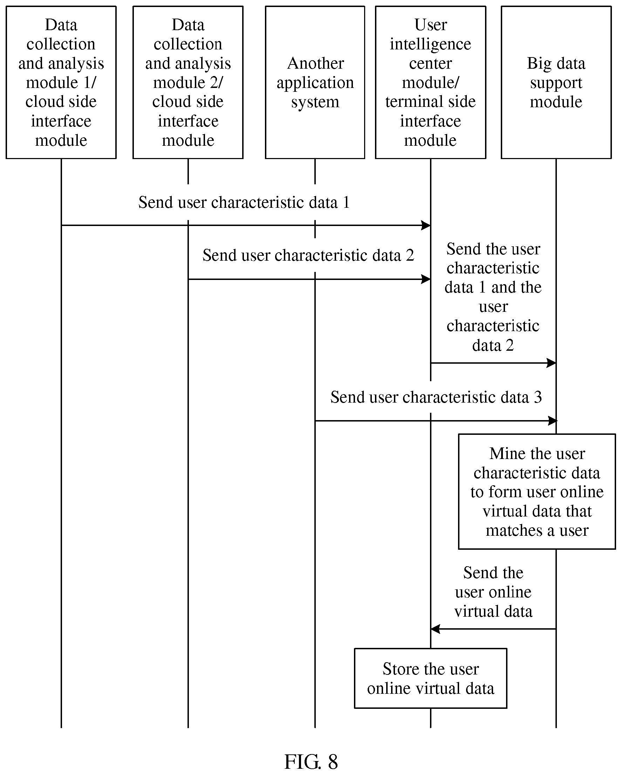

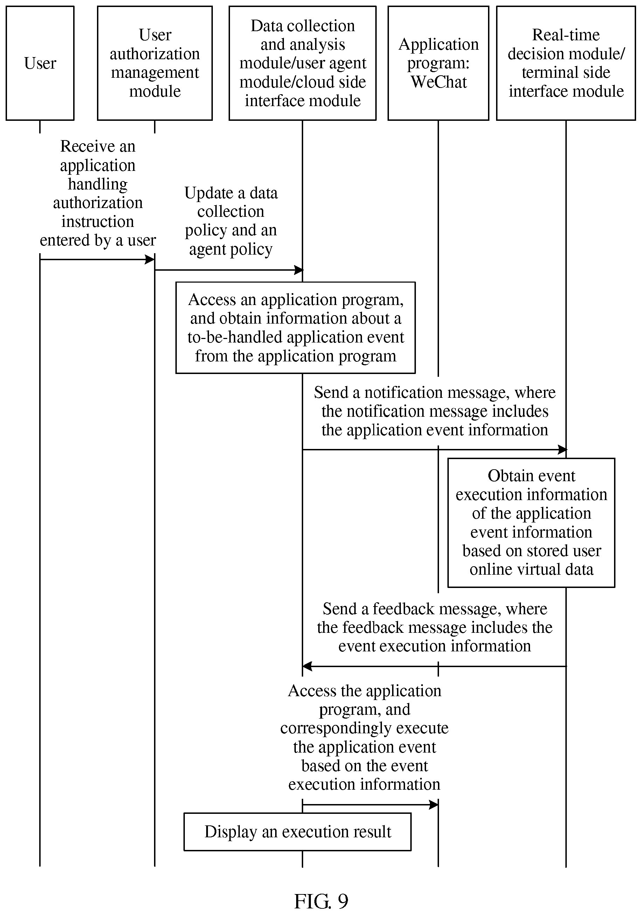

The following describes the solutions provided in embodiments of the present invention with reference to FIG. 7A and FIG. 7B, FIG. 8, and FIG. 9. FIG. 7A and FIG. 7B are a flowchart of performing data collection and analysis by a first intelligent assistant client according to an embodiment of the present invention. FIG. 8 is a flowchart of forming user online virtual data by a second intelligent assistant client according to an embodiment of the present invention. FIG. 9 is a flowchart of intelligently handling an application event by an intelligent assistant client according to an embodiment of the present invention.

In the foregoing embodiment, an intelligent assistant client may be disposed in the terminal or the cloud server, and the intelligent assistant client may intelligently handle an application event. The following gives a detailed description of intelligently handling the application event by a plurality of modules included in the first intelligent assistant client and the second intelligent assistant client.

A user interface module, a user authorization management module, a data collection and analysis module, a user agent module, and a cloud side interface module in the following are located in the first intelligent assistant client. A terminal side interface module, a real-time decision module, a user intelligence center module, and a big data system interface module are located in the second intelligent assistant client.

FIG. 7A and FIG. 7B are used as an example to describe a process in which a terminal collects user original data and collects statistics about the user original data to obtain user characteristic data. As shown in FIG. 7A and FIG. 7B, the process specifically includes the following steps.

Step 701: A user authorization management module receives an application accessing authorization instruction entered by a user.

Specifically, to enable a first intelligent assistant client to access an application program, obtain application program data, and so on, the user authorizes the first intelligent assistant client. The user may simultaneously authorize the first intelligent assistant client to access a plurality of application programs, or may authorize the first intelligent assistant client to access one application program. In this embodiment of the present invention, an example in which the user authorizes the first intelligent assistant client to access one application program is described.

The user authorizes the first intelligent assistant client to access an application program 1. To be specific, a user interface module provides a man-machine interaction interface for the user, and the user enters an application accessing authorization instruction into the first intelligent assistant client. The application accessing authorization instruction includes an identifier of the application program 1 that can be accessed.

The user authorization management module receives the application accessing authorization instruction. The user authorization management module determines, based on the application accessing authorization instruction, that the user authorization management module may subsequently interact with the application program 1.

Step 702: The terminal receives a first touch operation entered by the user.

Specifically, the user enters the first touch operation into the terminal, and the first touch operation is used to enable the terminal to enable the application program 1. The first touch operation may be a tap operation.

The terminal enables the application program 1 according to the first touch operation.

Step 703: When the user authorization management module detects that an application program 1 is enabled, the user authorization management module determines whether the user authorization management module has been authorized by the user to access the application program 1.

Specifically, after receiving the application accessing authorization instruction, the user authorization management module obtains the identifier of the to-be-accessed application program 1 from the application accessing authorization instruction. The user authorization management module periodically detects, based on the identifier, whether the application program 1 in the terminal is enabled. If detecting that the application program 1 is enabled, the user authorization management module determines whether the user authorization management module has been authorized by the user to access the application program 1.

Further, the user authorization management module may perform determining depending on whether the user authorization management module receives the application accessing authorization instruction of the application program 1.

Step 704: If the user authorization management module determines that the user authorization management module has been authorized by the user to access the application program 1, the user authorization management module instructs a data collection and analysis module to access the application program 1.

Specifically, if the user authorization management module has been authorized by the user to access the application program 1 (in other words, if the user authorization management module has received the application accessing authorization instruction of the application program 1), the user authorization management module instructs the data collection and analysis module to access the application program 1.

Step 705: The data collection and analysis module obtains user original data in the application program 1.

Specifically, when instructing the data collection and analysis module to access the application program 1, the user authorization management module further sends the identifier of the application program 1 to the data collection and analysis module.

The data collection and analysis module accesses the application program 1 by using the identifier of the application program 1 and obtains the user original data in the application program 1.

Further, a process in which the data collection and analysis module accesses the application program 1 is specifically: The data collection and analysis module accesses the application program 1 based on user authorization. For example, the application accessing authorization instruction further includes access information, for example, a login name and a password. The data collection and analysis module can access the application program 1 by using the login name and the password.

It can be understood that the data collection and analysis module may obtain the user original data through reading, packet capture analysis, screen capture identification, crawler analysis, and the like on data in the application program 1. The foregoing manners of obtaining the user original data are existing manners, and are not described herein.

In an example, the user original data obtained by the data collection and analysis module is: The user clicks a link separately in the morning, noon, and evening.

Step 706: The data collection and analysis module collects statistics about the user original data to obtain user characteristic data.

Specifically, the data collection and analysis module determines a common characteristic of the user original data, and collects statistics about the user original data by using the common characteristic to obtain the user characteristic data.

Further, based on the foregoing example, the user original data is "the user clicks a link separately in the morning, noon, and evening". The data collection and analysis module determines that the common characteristic of the user original data is "the user clicks a link", and the data collection and analysis module collects statistics based on the common characteristic, to obtain the user characteristic data "click a link three times a day".

It can be understood that, in the foregoing example, an example in which the user original data is a type of behavior data of the user is described. In actual application, statistics about another type of user original data may also be collected in the foregoing manner.

Step 707: The data collection and analysis module sends the user characteristic data to a user intelligence center module according to a preset sending rule.

Specifically, the data collection and analysis module sends the user characteristic data to a terminal side interface module by using a cloud side interface module. The terminal side interface module forwards the user characteristic data to the user intelligence center module. After receiving the user characteristic data, the user intelligence center module sends the user characteristic data to a big data system module by using a big data system interface module, so that the big data system module forms, based on the user characteristic data, user online virtual data that matches the user.

A process in which the data collection and analysis module sends the user characteristic data to the user intelligence center module is described in detail in the foregoing embodiment, and is not described herein again.

It should be noted that, in FIG 7A and FIG. 7B, the data collection and analysis module and the cloud side interface module are not shown separately, but the data collection and analysis module and the cloud side interface module are shown together.

Step 708: The terminal receives a second touch operation entered by the user.

Specifically, the user enters the second touch operation into the terminal, and the second touch operation is used to enable the terminal to stop and close the application program 1. The second touch operation may be a tap operation.

The terminal stops and closes the application program 1 according to the second touch operation.

Step 709: The user authorization management module determines whether the application program 1 has stopped running.

Step 710: If the application program 1 has stopped running, the user authorization management module instructs the data collection and analysis module to stop obtaining the user original data in the application program 1.

Specifically, the user authorization management module periodically detects, based on the identifier of the application program 1, whether the application program 1 in the terminal has stopped running. If detecting that the application program 1 has stopped running, the user authorization management module instructs the data collection and analysis module to stop obtaining the user original data in the application program 1.

Further, when the user authorization management module instructs the data collection and analysis module to stop obtaining the user original data in the application program 1, the user authorization management module may send a data collection policy to the data collection and analysis module, and the data collection and analysis module may obtain the user original data based on the data collection policy. The data collection policy includes a data obtaining moment, a data obtaining manner, and the like.

FIG. 8 is used as an example to describe a process in which a second intelligent assistant client forms, based on user characteristic data, user online virtual data that matches a user. As shown in FIG. 8, the process specifically includes the following steps.

Step 801: A data collection and analysis module 1 sends user characteristic data 1 to a user intelligence center module.

Specifically, after obtaining the user characteristic data 1, the data collection and analysis module 1 in a first intelligent assistant client 1 sends the user characteristic data 1 to a terminal side interface module in the second intelligent assistant client by using a cloud side interface module.

The terminal side interface module receives the user characteristic data 1 and forwards the user characteristic data 1 to the user intelligence center module.

In this embodiment of the present invention, the first intelligent assistant client 1 may be located in a terminal 1.

It should be noted that, in FIG. 8, the user intelligence center module and the terminal side interface module are not separately shown, but the terminal side interface module and the user intelligence center module are shown together.

Step 802: A data collection and analysis module 2 sends user characteristic data 2 to the user intelligence center module.

Specifically, after obtaining the user characteristic data 2, the data collection and analysis module 2 in a first intelligent assistant client 2 sends the user characteristic data 2 to the terminal side interface module in the second intelligent assistant client by using the cloud side interface module.

The terminal side interface module receives the user characteristic data 2 and forwards the user characteristic data 2 to the user intelligence center module.

In this embodiment of the present invention, the first intelligent assistant client 2 may be located in a terminal 2, and the terminal 1 and the terminal 2 may belong to a same user, or may belong to different users. When the terminal 1 and the terminal 2 belong to a same user, the user intelligence center module obtains user characteristic data from a plurality of terminals of the same user, so that the user intelligence center module can obtain more details of the user, and user online virtual data formed in the subsequent steps is more consistent with the user. When the terminal 1 and the terminal 2 belong to different users, user online virtual data that matches a plurality of users may be formed.

In this embodiment of the present invention, an example in which the terminal 1 and the terminal 2 belong to a same user is described.

Step 803: The user intelligence center module sends the user characteristic data 1 and the user characteristic data 2 to a big data system module.

Specifically, after receiving the user characteristic data 1 and the user characteristic data 2, the user intelligence center module sends the user characteristic data 1 and the user characteristic data 2 to the big data system module by using a big data system interface module.

In this embodiment of the present invention, the big data system module is located in a cloud server.

Step 804: The big data system module receives user characteristic data 3 sent by another application system.

Specifically, the big data system module may further obtain the user characteristic data 3 from the another application system.

In this embodiment of the present invention, the another application system may be specifically an application server corresponding to an application, for example, a server corresponding to an application program "WeChat", and a server corresponding to an application program "Dianping". The server also stores user characteristic data of the user.

Step 805: The big data system module mines the user characteristic data to form user online virtual data that matches a user.

Specifically, in this embodiment of the present invention, the user online virtual data includes a user profile.

The big data system module determines content information of the user characteristic data; the big data system module assigns a label to the user characteristic data by using the content information; and the big data system module forms, by using the label, the user profile that matches the user.

In an example, user characteristic data of a user A includes Xiaoming, 20, a user avatar, unmarried, a salary of 10000, and a software engineer. The big data system module determines content information of each piece of user characteristic data. To be specific, the big data system module determines that the user A's name is "Xiaoming", the user A's age is "20", the user A's photo is the "user avatar", the user A's family status is "unmarried", the user A's income is the "salary of 10000", and the user A's job is the "software engineer". The big data system module assigns a label to each piece of user characteristic data by using the content information, to be specific, assigns a name label to "Xiaoming", assigns an age label to "20", assigns a photo label to the "user avatar", assigns a family status label to "unmarried", assigns an income label to the "salary of 10000", and assigns a job label to the "software engineer", and associates the foregoing labels with the user A to form a user profile of the user A. In other words, the user profile of the user A includes a name label, an age label, a photo label, a family status label, an income label, and a job label.

Further, the user online virtual data includes user association information and user behavior information.

The big data system module obtains user characteristic data belonging to a user social label from the user profile, and uses the user characteristic data belonging to the user social label as the user association information; obtains user characteristic data belonging to a user behavior label from the user profile, and uses the user characteristic data belonging to the user behavior label as the user behavior information.

In an example, the user profile of the user A includes a user social label and a user behavior label. The user social label is used to indicate a social relationship of the user A, and the user behavior label is used to indicate a behavior mode of the user A. For example, the user social label of the user A includes content such as an address book, communication duration, and a consumption object of the user A, and the user behavior label of the user A includes content: when receiving a package, the user A contacts a secretary to fetch the package, when using an application Dianping, the user A makes payment by using Alipay, and so on. The big data system module uses the content such as the address book, the communication duration, and the consumption object of the user A as user association information, and uses content: when receiving a package, the user A contacts a secretary to fetch the package and so on as user behavior information. A manner of contacting the secretary is used as the user association information.

Step 806: The big data system module sends the user online virtual data to the user intelligence center module.

Step 807: The user intelligence center module stores the user online virtual data.

FIG. 9 is used as an example to describe a process in which an intelligent assistant client intelligently handles an application event. As shown in FIG. 9, the process specifically includes the following steps.

Step 901: A user authorization management module receives an application handling authorization instruction entered by a user.

Specifically, when the user expects that a terminal replaces the user to handle some transactions (for example, receive a package), the user enters the application handling authorization instruction into the user authorization management module. The application handling authorization instruction includes an identifier (for example, an identifier of WeChat and an identifier of Messages) of an application program in the terminal.

The user authorization management module receives the application handling authorization instruction.

In an example, a transaction that the user expects that the terminal replaces the user to handle is receiving a package. In this step, the identifier of the application program included in the application handling authorization instruction is the identifier of the application program WeChat and the identifier of the application program Messages.

Step 902: The user authorization management module updates a data collection policy in a data collection and analysis module and an agent policy in a user agent module.

Specifically, the user authorization management module updates the data collection policy and the agent policy according to the application handling authorization instruction, so that the data collection and analysis module collects application data in the application programs WeChat and Messages based on an authorization range and requirement of the user, and the user agent module performs a command operation on the application programs WeChat and Messages based on the authorization range and requirement of the user.

Further, when updating the data collection policy and the agent policy, the user authorization management module separately sends the application handling authorization instruction to the data collection and analysis module and the user agent module.

Step 903: The data collection and analysis module accesses an application program based on an identifier of the application program, and obtains information about a to-be-handled application event from the application program.

Specifically, in the foregoing example, the data collection and analysis module accesses the application program Messages based on the identifier of the application program Messages, and obtains, from the application program Messages, application data of the event of receiving the package, for example, the package, a name and phone number of a courier, and a pickup place.

After obtaining the application data, the data collection and analysis module generates application event information. The application event information includes receiving the package, the package, the name and phone number of the courier, and the pickup place.

Step 904: The data collection and analysis module sends a notification message to a real-time decision module, where the notification message includes the application event information.

Specifically, after generating the application event information, the data collection and analysis module sends the notification message to a terminal side interface module by using a cloud side interface module. The notification message includes the application event information.

After receiving the notification message, the terminal side interface module sends the notification message to the real-time decision module.

Further, the notification message includes an identifier of the terminal, and the identifier of the terminal is used to enable the real-time decision module to obtain, from a database of a user intelligence center module based on the identifier of the terminal, user online virtual data that matches the identifier of the terminal.

Step 905: The real-time decision module obtains event execution information of the application event information based on stored user online virtual data.

Specifically, after receiving the notification message, the real-time decision module obtains the application event information and the identifier of the terminal from the notification message. The real-time decision module obtains, from the database of the user intelligence center module based on the identifier of the terminal, the user online virtual data that matches the identifier of the terminal. The real-time decision module obtains, based on the user online virtual data, the event execution information corresponding to the application event information.

In the foregoing example, the application event information specifically includes: receiving the package, the package, the name and phone number of the courier, and the pickup place. The real-time decision module first obtains, based on an identifier of the terminal such as a terminal A, user online virtual data that matches the terminal A from the database of the user intelligent center module, such as online virtual data of a user A. The real-time decision module determines, based on the online virtual data of the user A, that when the user A receives the package, the user A contacts a secretary by using WeChat to fetch the package. In other words, event execution information of receiving the package obtained by the real-time decision module is contacting the secretary by using WeChat to fetch the package.

Step 906: The real-time decision module sends a feedback message to the user agent module, where the feedback message includes the event execution information.

Specifically, the real-time decision module sends the feedback message to the cloud side interface module by using the terminal side interface module. After receiving the feedback message, the cloud side interface module sends the feedback message to the user agent module.

Step 907: The user agent module accesses the application program, and correspondingly executes the application event based on the event execution information.

Specifically, in the foregoing example, the user agent module accesses the application program WeChat based on the identifier of the application program WeChat.

The user agent module obtains the event execution information from the feedback message, to be specific, contacting the secretary by using WeChat to fetch the package. The user agent module sends WeChat information to the secretary in the application program WeChat.

Step 908: The user agent module displays an execution result.

Specifically, the user agent module displays the execution result of the application event, so as to notify the user that execution of the application event is completed.

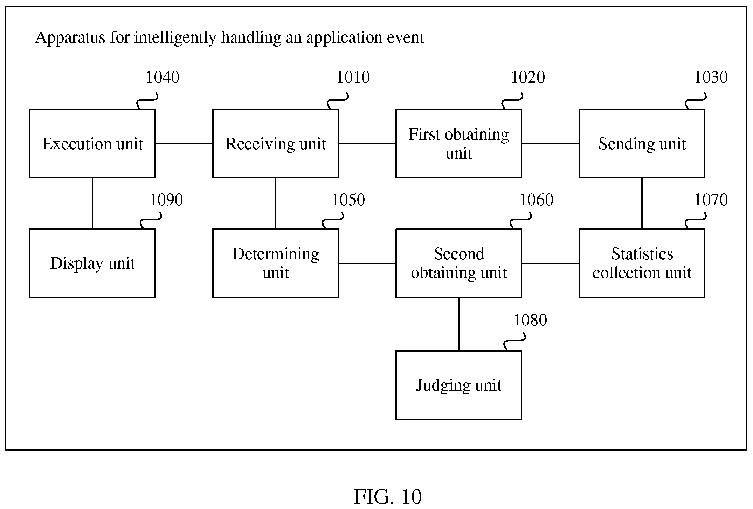

The content described in the foregoing embodiments may implement a method for intelligently handling an application event. Correspondingly, an embodiment of the present invention further provides an apparatus for intelligently handling an application event, to implement the method for intelligently handling an application event provided in the foregoing embodiments. The apparatus is applied to a terminal. As shown in FIG. 10, the apparatus includes a receiving unit 1010, a first obtaining unit 1020, a sending unit 1030, and an execution unit 1040.

The receiving unit 1010 is configured to receive an application handling authorization instruction entered by a user, where the application handling authorization instruction includes an identifier of an application program in the terminal.

The first obtaining unit 1020 is configured to: access the application program based on the identifier of the application program, and obtain information about a to-be-handled application event from the application program.

The sending unit 1030 is configured to send a notification message to a cloud server, where the notification message includes the application event information.

The receiving unit 1010 is further configured to receive a feedback message sent by the cloud server, where the feedback message includes event execution information, of the application event information, obtained by the cloud server based on user online virtual data.

The execution unit 1040 is configured to correspondingly execute the application event based on the event execution information.

Further, the receiving unit 1010 is configured to receive an application accessing authorization instruction entered by the user, where the application accessing authorization instruction includes the identifier of the application program.

The apparatus further includes: a determining unit 1050, configured to: when the apparatus detects that the application program is started, determine whether the apparatus has been authorized by the user to access the application program;
a second obtaining unit 1060, configured to: if the apparatus determines that the apparatus has been authorized by the user to access the application program, access the application program based on the identifier of the application program and obtain user original data in the application program; and
a statistics collection unit 1070, configured to collect statistics about the user original data to obtain user characteristic data.

The sending unit 1030 is further configured to send the user characteristic data to the cloud server according to a preset sending rule, so that the cloud server sends the user characteristic data to a big data system module, and the big data system module forms, based on the user characteristic data, the user online virtual data that matches the user.

Further, the apparatus includes: a judging unit 1080, configured to determine whether the application program has stopped running.

The second obtaining unit 1060 is further configured to: if the application program has stopped running, stop obtaining the user original data in the application program.

Further, the statistics collection unit 1070 is specifically configured to: determine a common characteristic of the user original data; and
collect statistics about the user original data by using the common characteristic to obtain the user characteristic data.

Further, the apparatus includes: a display unit 1090, configured to display an execution result of the application event.

Therefore, when the apparatus for intelligently handling an application event provided in this embodiment of the present invention is applied, the apparatus accesses the application program according to the application handling authorization instruction entered by the user, and obtains the information about the to-be-handled application event from the application program; the apparatus sends the application event information to the cloud server; and the apparatus correspondingly executes the application event based on the event execution information fed back by the cloud server, and displays the execution result. In the solution provided in this embodiment of the present invention, the following prior-art case is avoided: An intelligent assistant provides information or a service for the user only after the user gives a requirement instruction, and cannot provide a most proper service for the user because the intelligent assistant cannot interact with an application or a function in the terminal. In this way, the terminal can interact with the application or function in the terminal based on user authorization, replace the user to intelligently handle an application event, and provide proper information and a proper service for the user, thereby improving user experience.

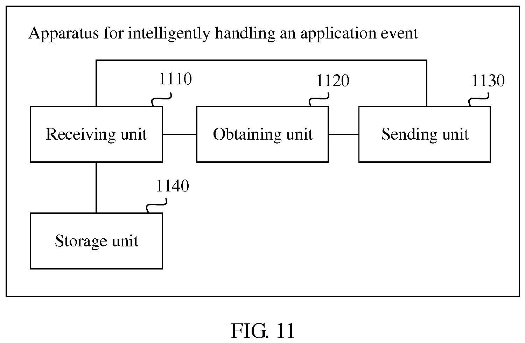

The content described in the foregoing embodiments may implement a method for intelligently handling an application event. Correspondingly, an embodiment of the present invention further provides another apparatus for intelligently handling an application event, to implement the method for intelligently handling an application event provided in the foregoing embodiments. The apparatus is applied to a cloud server. As shown in FIG. 11, the apparatus includes a receiving unit 1110, an obtaining unit 1120, and a sending unit 1130.

The receiving unit 1110 is configured to receive a notification message sent by a terminal, where the notification message includes information about a to-be-handled application event in an application program in the terminal.

The obtaining unit 1120 is configured to obtain event execution information of the application event information based on stored user online virtual data.

The sending unit 1130 is configured to send a feedback message to the terminal, where the feedback message includes the event execution information, so that the terminal correspondingly executes the application event based on the event execution information.

Further, the receiving unit 1110 is configured to receive user characteristic data sent by the terminal.

The sending unit 1130 is further configured to send the user characteristic data to a big data system module.

The receiving unit 1110 is further configured to receive the user online virtual data that matches a user and that is formed after the big data system module mines the user characteristic data.

The apparatus further includes a storage unit 1140, configured to store the user online virtual data.

Further, the notification message received by the receiving unit 1110 includes an identifier of the terminal.

The obtaining unit 1120 is further configured to obtain, based on the identifier of the terminal, the user online virtual data that matches the identifier of the terminal.

Further, the user online virtual data stored in the storage unit 1140 includes a user profile, user association information, and user behavior information.

The obtaining unit 1120 is specifically configured to determine, from the user profile, the user association information, and the user behavior information based on the application event information, the event execution information that matches the application event information.

Therefore, when the apparatus for intelligently handling an application event provided in this embodiment of the present invention is applied, the apparatus obtains the event execution information of the application event information based on the stored user online virtual data, and sends the event execution information to the terminal, so that the terminal correspondingly executes the application event based on the event execution information, and displays an execution result. In the solution provided in this embodiment of the present invention, the following prior-art case is avoided: An intelligent assistant provides information or a service for the user only after the user gives a requirement instruction, and cannot provide a most proper service for the user because the intelligent assistant cannot interact with an application or a function in the terminal. In this way, the terminal can interact with the application or function in the terminal based on user authorization, replace the user to intelligently handle an application event, and provide proper information and a proper service for the user, thereby improving user experience.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each application.

The steps in the method or algorithm described in the embodiments disclosed in this specification may be implemented by hardware, software module executed by the processor, or combination of hardware and software. The software module may reside in a random-access memory (RAM), a memory, a read-only memory (ROM), an electrically programmable ROM, an electrically erasable programmable ROM, a register, a hard disk, a removable disk, a CD-ROM, or any other form of storage medium known in the art.

## Claims

1. A method for intelligently handling an application event, wherein the method is performed by a terminal (200), and wherein the method comprises:
receiving (510) an application handling authorization instruction entered by a user, wherein the application handling authorization instruction comprises an identifier of an application program in the terminal;
accessing (520) the application program based on the identifier of the application program, and obtaining (520) information about a to-be-handled application event from the application program;
sending (530) a notification message to a cloud server, wherein the notification message comprises the information about the to-be-handled application event;
receiving (540) a feedback message sent by the cloud server, wherein the feedback message comprises event execution information, of the information about the to-be-handled application event, obtained by the cloud server based on user online virtual data; and
correspondingly executing (550) the application event based on the event execution information;
wherein the obtaining (520) the information about the to-be-handled application event from the application program comprises:
obtaining application data by at least one of reading, packet capture analysis, screen capture identification, and crawler analysis on data in the application program; and
after obtaining the application data, generating the information about the to-be-handled application event and including the obtained application data in the information about the to-be-handled application event;
wherein the application program is a social application program, an image management application program, a map application program, or a browser; and
wherein before the receiving (510) an application handling authorization instruction entered by a user, the method further comprises:
receiving an application accessing authorization instruction entered by the user, wherein the application accessing authorization instruction comprises the identifier of the application program;
when it is detected that the application program is started, determining whether the application program is authorized to be accessed;
if it is determined that the application program is authorized to be accessed, accessing the application program based on the identifier of the application program and obtaining user original data in the application program;
collecting statistics about the user original data to obtain user characteristic data; and
sending the user characteristic data to the cloud server according to a preset sending rule, so that the cloud server sends the user characteristic data to a big data system module, wherein the user characteristic data is used to enable the big data system module to generate the user online virtual data that matches the user.

2. The method according to claim 1, wherein the method further comprises:
determining whether the application program has stopped running; and
if the application program has stopped running, stopping obtaining the user original data in the application program.

3. The method according to claim 1, wherein the collecting statistics about the user original data to obtain user characteristic data specifically comprises:
determining a common characteristic of the user original data; and
collecting statistics about the user original data by using the common characteristic to obtain the user characteristic data.

4. The method according to claim 1, wherein the method further comprises: displaying an execution result of the application event.

5. A terminal (200) for intelligently handling an application event, wherein the terminal (200) comprises:
a receiving unit (1010), configured to receive an application handling authorization instruction entered by a user, wherein the application handling authorization instruction comprises an identifier of an application program in the terminal (200);
a first obtaining unit (1020), configured to: access the application program based on the identifier of the application program, and obtain information about a to-be-handled application event from the application program;
a sending unit (1030), configured to send a notification message to a cloud server, wherein the notification message comprises the information about the to-be-handled application event, wherein
the receiving unit (1010) is further configured to receive a feedback message sent by the cloud server, wherein the feedback message comprises event execution information, of the information about the to-be-handled application event, obtained by the cloud server based on user online virtual data; and
an execution unit (1040), configured to correspondingly execute the application event based on the event execution information;
wherein the first obtaining unit (1020) is specifically configured:
to obtain application data by at least one of reading, packet capture analysis, screen capture identification, and crawler analysis on data in the application program; and
after obtaining the application data, to generate the information about the to-be-handled application event and to include the obtained application data in the information about the to-be-handled application event;
wherein the application program is a social application program, an image management application program, a map application program, or a browser; and
wherein the receiving unit (1010) is further configured to receive, before the receiving an application handling authorization instruction entered by a user, an application accessing authorization instruction entered by the user, wherein the application accessing authorization instruction comprises the identifier of the application program; and
the terminal (200) further comprises: a determining unit (1050), configured to: when the terminal (200) detects that the application program is started, determine whether the terminal (200) has been authorized by the user to access the application program;
a second obtaining unit (1060), configured to: if the terminal (200) determines that the terminal (200) has been authorized by the user to access the application program, access the application program based on the identifier of the application program and obtain user original data in the application program; and
a statistics collection unit (1070), configured to collect statistics about the user original data to obtain user characteristic data, wherein
the sending unit (1030) is further configured to send the user characteristic data to the cloud server according to a preset sending rule, so that the cloud server sends the user characteristic data to a big data system module, wherein the user characteristic data is used to enable the big data system module to generate the user online virtual data that matches the user.

6. A system comprising the terminal (200) of claim 5 and a cloud server for intelligently handling an application event, wherein the cloud server comprises:
a receiving unit (1110), configured to receive a notification message sent by the terminal (200), wherein the notification message comprises information about a to-be-handled application event in an application program in the terminal (200);
an obtaining unit (1120), configured to obtain event execution information of the information about the to-be-handled application event based on stored user online virtual data; and
a sending unit (1130), configured to send a feedback message to the terminal (200), wherein the feedback message comprises the event execution information, and the event execution information is used to enable the terminal (200) to correspondingly execute the application event;
wherein the information about the to-be-handled application event includes application data obtained by at least one of reading, packet capture analysis, screen capture identification, and crawler analysis on data in the application program; and
wherein the application program is a social application program, an image management application program, a map application program, or a browser.

7. The system according to claim 6, wherein the receiving unit (1110) is further configured to receive user characteristic data sent by the terminal (200);
the sending unit (1130) is further configured to send the user characteristic data to a big data system module;
the receiving unit (1110) is further configured to receive the user online virtual data that matches a user and that is formed after the big data system module performs statistics collection and classification on the user characteristic data; and
the cloud server further comprises: a storage unit (1140), configured to store the user online virtual data.

8. The system according to claim 6, wherein the notification message received by the receiving unit (1110) further comprises an identifier of the terminal (200); and
the obtaining unit (1120) is further configured to obtain, based on the identifier of the terminal (200), the user online virtual data that matches the identifier of the terminal (200).

9. The system according to claim 7, wherein the user online virtual data stored in the storage unit (1140) comprises a user profile, user association information, and user behavior information; and
the obtaining unit (1120) is specifically configured to determine, from the user profile, the user association information, and the user behavior information based on the information about the to-be-handled application event, the event execution information that matches the information about the to-be-handled application event.

## Patentansprüche

1. Verfahren zum intelligenten Behandeln eines Anwendungsereignisses, wobei das Verfahren durch ein Endgerät (200) durchgeführt wird und wobei das Verfahren umfasst:
Empfangen (510) einer Anwendungsbehandlungsberechtigungsanweisung, die durch einen Benutzer eingegeben wird, wobei die Anwendungsbehandlungsberechtigungsanweisung einen Bezeichner eines Anwendungsprogramms in dem Endgerät umfasst;
Zugreifen (520) auf das Anwendungsprogramm basierend auf dem Bezeichner des Anwendungsprogramms und Erhalten (520) von Informationen über ein zu behandelndes Anwendungsereignis von dem Anwendungsprogramm;
Senden (530) einer Benachrichtigungsnachricht an einen Cloud-Server, wobei die Benachrichtigungsnachricht die Informationen über das zu behandelnde Anwendungsereignis umfasst;
Empfangen (540) einer Rückmeldungsnachricht, die durch den Cloud-Server gesendet wird, wobei die Rückmeldungsnachricht Ereignisausführungsinformationen, der Informationen über das zu behandelnde Anwendungsereignis, die durch den Cloud-Server basierend auf virtuellen Online-Daten des Benutzers erhalten werden, umfasst; und
entsprechendes Ausführen (550) des Anwendungsereignisses basierend auf den Ereignisausführungsinformationen;
wobei das Erhalten (520) der Informationen über das zu behandelnde Anwendungsereignis von dem Anwendungsprogramm umfasst:
Erhalten von Anwendungsdaten durch mindestens eines von Lesen, Paketaufnahmeanalyse, Bildschirmaufnahmebezeichnung und Crawler-Analyse von Daten in dem Anwendungsprogramm; und
nach dem Erhalten der Anwendungsdaten, Erzeugen der Informationen über das zu behandelnde Anwendungsereignis und Einschließen der erhaltenen Anwendungsdaten in die Informationen über das zu behandelnde Anwendungsereignis;
wobei das Anwendungsprogramm ein soziales Anwendungsprogramm, ein Bildverwaltungsanwendungsprogramm, ein Kartenanwendungsprogramm oder ein Browser ist; und
wobei vor dem Empfangen (510) einer Anwendungsbehandlungsberechtigungsanweisung, die durch einen Benutzer eingegeben wird, das Verfahren ferner umfasst:
Empfangen einer Anwendungszugriffsberechtigungsanweisung, die durch den Benutzer eingegeben wird, wobei die Anwendungszugriffsberechtigungsanweisung den Bezeichner des Anwendungsprogramms umfasst;
wenn erfasst wird, dass das Anwendungsprogramm gestartet wird, Bestimmen, ob das Anwendungsprogramm berechtigt ist, um auf es zuzugreifen;
falls bestimmt wird, dass das Anwendungsprogramm berechtigt ist, um auf es zuzugreifen, Zugreifen auf das Anwendungsprogramm basierend auf dem Bezeichner des Anwendungsprogramms und Erhalten von Originaldaten des Benutzers in dem Anwendungsprogramm;
Sammeln von Statistiken über die Originaldaten des Benutzers, um Merkmalsdaten des Benutzers zu erhalten; und
Senden der Merkmalsdaten des Benutzers an den Cloud-Server gemäß einer voreingestellten Senderegel, sodass der Cloud-Server die Merkmalsdaten des Benutzers an ein Big-Data-System-Modul sendet, wobei die Merkmalsdaten des Benutzers verwendet werden, um das Big-Data-System-Modul zu aktivieren, um die virtuelle Online-Daten des Benutzers, die mit dem Benutzer übereinstimmen, zu erzeugen.

2. Verfahren nach Anspruch 1, wobei das Verfahren ferner umfasst:
Bestimmen, ob ein Ablaufen des Anwendungsprogramm angehalten wurde; und
falls das Ablaufen des Anwendungsprogramm angehalten wurde, Anhalten des Erhaltens der Originaldaten des Benutzers in dem Anwendungsprogramm.

3. Verfahren nach Anspruch 1, wobei das Sammeln von Statistiken über die Originaldaten des Benutzers, um Merkmalsdaten des Benutzers zu erhalten, speziell umfasst:
Bestimmen eines gemeinsamen Merkmals der Originaldaten des Benutzers; und
Sammeln von Statistiken über die Originaldaten des Benutzers durch Verwenden des gemeinsamen Merkmals, um die Merkmalsdaten des Benutzers zu erhalten.

4. Verfahren nach Anspruch 1, wobei das Verfahren ferner umfasst: Anzeigen eines Ausführungsergebnisses des Anwendungsereignisses.

5. Endgerät (200) zum intelligenten Behandeln eines Anwendungsereignisses, wobei das Endgerät (200) umfasst:
eine Empfangseinheit (1010), die konfiguriert ist, um eine Anwendungsbehandlungsberechtigungsanweisung, die durch den Benutzer eingegeben wird, zu empfangen, wobei die Anwendungsbehandlungsberechtigungsanweisung einen Bezeichner eines Anwendungsprogramms in dem Endgerät (200) umfasst;
eine erste Erhaltungseinheit (1020), die konfiguriert ist zum: Zugreifen auf das Anwendungsprogramm basierend auf dem Bezeichner des Anwendungsprogramms und Erhalten von Informationen über ein zu behandelndes Anwendungsereignis von dem Anwendungsprogramm;
eine Sendeeinheit (1030), die konfiguriert ist, um eine Benachrichtigungsnachricht an einen Cloud-Server zu senden, wobei die Benachrichtigungsnachricht die Informationen über das zu behandelnde Anwendungsereignis umfasst, wobei
die Empfangseinheit (1010) ferner konfiguriert ist, um eine Rückmeldungsnachricht, die durch den Cloud-Server gesendet wird, zu empfangen, wobei die Rückmeldungsnachricht Ereignisausführungsinformationen, der Informationen über das zu behandelnde Anwendungsereignis, die durch den Cloud-Server basierend auf virtuellen Online-Daten des Benutzers erhalten werden, umfasst; und
eine Ausführungseinheit (1040), die konfiguriert ist, um das Anwendungsereignis basierend auf den Ereignisausführungsinformationen entsprechend auszuführen;
wobei die erste Erhaltungseinheit (1020) speziell konfiguriert ist:
um Anwendungsdaten durch mindestens eines von Lesen, Paketaufnahmeanalyse, Bildschirmaufnahmebezeichnung und Crawler-Analyse von Daten in dem Anwendungsprogramm zu erhalten; und
nach dem Erhalten der Anwendungsdaten, um Informationen über das zu behandelnde Anwendungsereignis zu erzeugen und die erhaltenen Anwendungsdaten in die Informationen über das zu behandelnde Anwendungsereignis einzuschließen;
wobei das Anwendungsprogramm ein soziales Anwendungsprogramm, ein Bildverwaltungsanwendungsprogramm, ein Kartenanwendungsprogramm oder ein Browser ist; und
wobei die Empfangseinheit (1010) ferner konfiguriert ist, um, vor dem Empfangen einer Anwendungsbehandlungsberechtigungsanweisung, die durch einen Benutzer eingegeben wird, eine Anwendungszugriffsberechtigungsanweisung, die durch den Benutzer eingegeben wird, zu empfangen, wobei die Anwendungszugriffsberechtigungsanweisung den Bezeichner des Anwendungsprogramms umfasst; und
das Endgerät (200) ferner umfasst: eine Bestimmungseinheit (1050), die konfiguriert ist zum: wenn das Endgerät (200) erfasst, dass das Anwendungsprogramm gestartet wird, Bestimmen, ob das Endgerät (200) durch den Benutzer berechtigt wurde, auf das Anwendungsprogramm zuzugreifen;
eine zweite Erhaltungseinheit (1060), die konfiguriert ist zum: falls das Endgerät (200) bestimmt, dass das Endgerät (200) durch den Benutzer berechtigt wurde, auf das Anwendungsprogramm zuzugreifen, Zugreifen auf das Anwendungsprogramm basierend auf dem Bezeichner des Anwendungsprogramms und Erhalten von Originaldaten des Benutzers in dem Anwendungsprogramm; und
eine Statistiksammlungseinheit (1070), die konfiguriert ist, um Statistiken über die Originaldaten des Benutzers zu sammeln, um Merkmalsdaten des Benutzers zu erhalten, wobei
die Sendeeinheit (1030) ferner konfiguriert ist, um die Merkmalsdaten des Benutzers gemäß einer voreingestellten Senderegel an den Cloud-Server zu senden, sodass der Cloud-Server die Merkmalsdaten des Benutzers an ein Big-Data-System-Modul sendet, wobei die Merkmalsdaten des Benutzers verwendet werden, um das Big-Data-System-Modul zu aktivieren, die virtuellen Online-Daten des Benutzers, die mit dem Benutzer übereinstimmen, zu erzeugen.

6. System, das das Endgerät (200) nach Anspruch 5 und einen Cloud-Server zum intelligenten Behandeln eines Anwendungsereignisses umfasst, wobei der Cloud-Server umfasst:
eine Empfangseinheit (1110), die konfiguriert ist, um eine Benachrichtigungsnachricht, die durch das Endgerät (200) gesendet wird, zu empfangen, wobei die Benachrichtigungsnachricht Informationen über ein zu behandelndes Anwendungsereignis in einem Anwendungsprogramm in dem Endgerät (200) umfasst;
eine Erhaltungseinheit (1120), die konfiguriert ist, um Ereignisausführungsinformationen der Informationen über das zu behandelnde Anwendungsereignis basierend auf gespeicherten virtuellen Online-Daten des Benutzers zu erhalten; und
eine Sendeeinheit (1130), die konfiguriert ist, um eine Rückmeldungsnachricht an das Endgerät (200) zu senden, wobei die Rückmeldungsnachricht die Ereignisausführungsinformationen umfasst und die Ereignisausführungsinformationen verwendet werden, um das Endgerät (200) zu aktivieren, um das Anwendungsereignis entsprechend auszuführen;
wobei die Informationen über das zu behandelnde Anwendungsereignis Anwendungsdaten, die durch mindestens eines von Lesen, Paketaufnahmeanalyse, Bildschirmaufnahmebezeichnung und Crawler-Analyse von Daten in dem Anwendungsprogramm erhalten werden, einschließt; und
wobei das Anwendungsprogramm ein soziales Anwendungsprogramm, ein Bildverwaltungsanwendungsprogramm, ein Kartenanwendungsprogramm oder ein Browser ist.

7. System nach Anspruch 6, wobei die Empfangseinheit (1110) ferner konfiguriert ist, um Merkmalsdaten des Benutzers, die durch das Endgerät (200) gesendet werden, zu empfangen;
die Sendeeinheit (1130) ferner konfiguriert ist, um die Merkmalsdaten des Benutzers an ein Big-Data-System-Modul zu senden;
die Empfangseinheit (1110) ferner konfiguriert ist, um die virtuellen Online-Daten des Benutzers, die mit einem Benutzer übereinstimmen und die ausgebildet werden, nachdem das Big-Data-System-Modul eine Statistiksammlung und -klassifizierung an den Merkmalsdaten des Benutzers durchführt, zu empfangen; und
der Cloud-Server ferner umfasst: eine Speichereinheit (1140), die konfiguriert ist, um die virtuellen Online-Daten des Benutzers zu speichern.

8. System nach Anspruch 6, wobei die Benachrichtigungsnachricht, die durch die Empfangseinheit (1110) empfangen wird, ferner einen Bezeichner des Endgerät (200) umfasst; und
die Erhaltungseinheit (1120) ferner konfiguriert ist, um, basierend auf dem Bezeichner des Endgeräts (200), die virtuellen Online-Daten des Benutzers, die mit dem Bezeichner des Endgerät (200) übereinstimmen, zu erhalten.

9. System nach Anspruch 7, wobei die virtuellen Online-Daten des Benutzers, die in der Speichereinheit (1140) gespeichert werden, ein Benutzerprofil, Benutzerzuordnungsinformationen und Benutzerverhaltensinformationen umfassen; und
die Erhaltungseinheit (1120) speziell konfiguriert ist, um, von dem Benutzerprofil, den Benutzerzuordnungsinformationen und den Benutzerverhaltensinformationen basierend auf den Informationen über das zu behandelnde Anwendungsereignis, die Ereignisausführungsinformationen, die mit den Informationen über das zu behandelnde Anwendungsereignis übereinstimmen, zu bestimmen.

## Revendications

1. Procédé destiné à traiter de manière intelligente un événement d'application, dans lequel le procédé est effectué par un terminal (200), et le procédé comprenant :
la réception (510) d'une instruction d'autorisation de traitement d'application entrée par un utilisateur, l'instruction d'autorisation de traitement d'application comprenant un identificateur d'un programme d'application dans le terminal ;
l'accès (520) au programme d'application en fonction de l'identificateur du programme d'application, et l'obtention (520) d'informations sur un événement d'application à traiter à partir du programme d'application ;
l'envoi (530) d'un message de notification à un serveur cloud, le message de notification comprenant les informations sur l'événement d'application à traiter ;
la réception (540) d'un message de rétroaction envoyé par le serveur cloud, le message de rétroaction comprenant des informations d'exécution d'événement, des informations sur l'événement d'application à traiter, obtenues par le serveur cloud en fonction des données virtuelles en ligne d'utilisateur ; et
l'exécution en conséquence (550) de l'événement d'application en fonction des informations d'exécution d'événement ;
l'obtention (520) des informations sur l'événement d'application à traiter à partir du programme d'application comprenant :
l'obtention de données d'application par au moins l'une parmi une lecture, une analyse de capture de paquets, une identification de capture d'écran et une analyse du robot d'exploration sur des données dans le programme d'application ; et
après avoir obtenu les données d'application, la génération des informations sur l'événement d'application à traiter et l'inclusion des données d'application obtenues dans les informations sur l'événement d'application à traiter ;
le programme d'application étant un programme d'application sociale, un programme d'application de gestion d'image, un programme d'application de carte ou un navigateur ; et
avant la réception (510) d'une instruction d'autorisation de traitement d'application entrée par un utilisateur, le procédé comprenant en outre :
la réception d'une instruction d'autorisation d'accès à l'application entrée par l'utilisateur, l'instruction d'autorisation d'accès à l'application comprenant l'identificateur du programme d'application ;
lorsqu'il est détecté que le programme d'application est démarré, le fait de déterminer si l'accès au programme d'application est autorisé ;
s'il est déterminé que l'accès au programme d'application est autorisé, l'accès au programme d'application en fonction de l'identificateur du programme d'application et l'obtention de données d'origine d'utilisateur dans le programme d'application ;
la collecte de statistiques sur les données d'origine d'utilisateur pour obtenir des données de caractéristiques d'utilisateur ; et
l'envoi des données de caractéristiques d'utilisateur au serveur cloud selon une règle d'envoi prédéfinie, de sorte que le serveur cloud envoie les données de caractéristiques d'utilisateur à un module de système de mégadonnées, les données de caractéristiques d'utilisateur étant utilisées pour permettre au module de système de mégadonnées de générer les données virtuelles en ligne d'utilisateur qui correspondent à l'utilisateur.

2. Procédé selon la revendication 1, dans lequel le procédé comprend en outre :
le fait de déterminer si le programme d'application a cessé de fonctionner ; et
si le programme d'application a cessé de fonctionner, l'arrêt de l'obtention des données d'origine d'utilisateur dans le programme d'application.

3. Procédé selon la revendication 1, dans lequel la collecte de statistiques sur les données d'origine d'utilisateur pour obtenir des données de caractéristiques d'utilisateur comprend spécifiquement :
la détermination d'une caractéristique commune des données d'origine d'utilisateur ; et
la collecte de statistiques sur les données d'origine d'utilisateur à l'aide de la caractéristique commune pour obtenir les données de caractéristique d'utilisateur.

4. Procédé selon la revendication 1, dans lequel le procédé comprend en outre : l'affichage d'un résultat d'exécution de l'événement d'application.

5. Terminal (200) pour traiter de manière intelligente un événement d'application, dans lequel le terminal (200) comprend :
une unité de réception (1010), configurée pour recevoir une instruction d'autorisation de traitement d'application entrée par un utilisateur, l'instruction d'autorisation de traitement d'application comprenant un identificateur d'un programme d'application dans le terminal (200) ;
une première unité d'obtention (1020), configurée pour : accéder au programme d'application en fonction de l'identificateur du programme d'application, et obtenir des informations sur un événement d'application à traiter à partir du programme d'application ;
une unité d'envoi (1030), configurée pour envoyer un message de notification à un serveur cloud, le message de notification comprenant les informations sur l'événement d'application à traiter,
l'unité de réception (1010) étant en outre configurée pour recevoir un message de rétroaction envoyé par le serveur cloud, le message de rétroaction comprenant des informations d'exécution d'événement, des informations sur l'événement d'application à traiter, obtenues par le serveur cloud en fonction de données virtuelles en ligne d'utilisateur ; et
une unité d'exécution (1040), configurée pour exécuter en conséquence l'événement d'application en fonction des informations d'exécution d'événement ;
la première unité d'obtention (1020) étant configurée spécifiquement :
pour obtenir des données d'application par au moins l'une parmi une lecture, une analyse de capture de paquets, une identification de capture d'écran et une analyse du robot d'exploration sur des données dans le programme d'application ; et
après avoir obtenu les données d'application, pour générer les informations sur l'événement d'application à traiter et pour comporter les données d'application obtenues dans les informations sur l'événement d'application à traiter ;
le programme d'application étant un programme d'application sociale, un programme d'application de gestion d'image, un programme d'application de carte ou un navigateur ; et
l'unité de réception (1010) étant en outre configurée pour recevoir, avant la réception d'une instruction d'autorisation de traitement d'application entrée par un utilisateur, une instruction d'autorisation d'accès à l'application entrée par l'utilisateur, l'instruction d'autorisation d'accès à l'application comprenant l'identificateur du programme d'application ; et
le terminal (200) comprenant en outre : une unité de détermination (1050), configurée pour : lorsque le terminal (200) détecte que le programme d'application est démarré, déterminer si le terminal (200) a été autorisé par l'utilisateur à accéder au programme d'application ;
une seconde unité d'obtention (1060), configurée pour : si le terminal (200) détermine que le terminal (200) a été autorisé par l'utilisateur à accéder au programme d'application, accéder au programme d'application en fonction de l'identificateur du programme d'application et obtenir les données d'origine d'utilisateur dans le programme d'application ; et
une unité de collecte de statistiques (1070), configurée pour collecter des statistiques sur les données d'origine d'utilisateur afin d'obtenir des données de caractéristiques d'utilisateur,
l'unité d'envoi (1030) étant en outre configurée pour envoyer les données de caractéristiques d'utilisateur au serveur cloud selon une règle d'envoi prédéfinie, de sorte que le serveur cloud envoie les données de caractéristiques d'utilisateur à un module de système de mégadonnées, les données de caractéristiques d'utilisateur étant utilisées pour permettre au module du système de mégadonnées de générer les données virtuelles en ligne d'utilisateur qui correspondent à l'utilisateur.

6. Système comprenant le terminal (200) selon la revendication 5 et un serveur cloud pour traiter de manière intelligente un événement d'application, dans lequel le serveur cloud comprend :
une unité de réception (1110), configurée pour recevoir un message de notification envoyé par le terminal (200), le message de notification comprenant des informations sur un événement d'application à traiter dans un programme d'application dans le terminal (200) ;
une unité d'obtention (1120), configurée pour obtenir des informations d'exécution d'événement des informations sur l'événement d'application à traiter en fonction de données virtuelles en ligne d'utilisateur stockées ; et
une unité d'envoi (1130), configurée pour envoyer un message de rétroaction au terminal (200), le message de rétroaction comprenant les informations d'exécution d'événement, et les informations d'exécution d'événement étant utilisées pour permettre au terminal (200) d'exécuter en conséquence l'événement d'application ;
les informations sur l'événement d'application à traiter comportant des données d'application obtenues par au moins l'une parmi une lecture, une analyse de capture de paquets, une identification de capture d'écran et une analyse du robot d'exploration sur des données dans le programme d'application ; et
le programme d'application étant un programme d'application sociale, un programme d'application de gestion d'images, un programme d'application de carte ou un navigateur.

7. Système selon la revendication 6, dans lequel l'unité de réception (1110) est en outre configurée pour recevoir des données de caractéristiques d'utilisateur envoyées par le terminal (200) ;
l'unité d'envoi (1130) est en outre configurée pour envoyer les données de caractéristiques d'utilisateur à un module de système de mégadonnées ;
l'unité de réception (1110) est en outre configurée pour recevoir les données virtuelles en ligne d'utilisateur qui correspondent à un utilisateur et qui sont formées après que le module du système de mégadonnées effectue une collecte de statistiques et une classification sur les données de caractéristiques d'utilisateur ; et
le serveur cloud comprend en outre : une unité de stockage (1140), configurée pour stocker les données virtuelles en ligne d'utilisateur.

8. Système selon la revendication 6, dans lequel le message de notification reçu par l'unité de réception (1110) comprend en outre un identificateur du terminal (200) ; et
l'unité d'obtention (1120) est en outre configurée pour obtenir, en fonction de l'identificateur du terminal (200), des données virtuelles en ligne d'utilisateur qui correspondent à l'identificateur du terminal (200).

9. Système selon la revendication 7, dans lequel les données virtuelles en ligne d'utilisateur stockées dans l'unité de stockage (1140) comprennent un profil d'utilisateur, des informations de groupes d'utilisateur et des informations de comportement d'utilisateur ; et
l'unité d'obtention (1120) est spécifiquement configurée pour déterminer, à partir du profil d'utilisateur, des informations d'association d'utilisateurs et des informations de comportement d'utilisateur en fonction des informations sur l'événement d'application à traiter, les informations d'exécution d'événement qui correspondent aux informations sur l'événement d'application à traiter.
